(19) Europäisches Patentamt
European Patent Office
Office européen des brevets

(11) EP 2 231 401 B1

(12) **FASCICULE DE BREVET EUROPEEN**

(45) Date de publication et mention de la délivrance du brevet:
**12.02.2014 Bulletin 2014/07**

(21) Numéro de dépôt: **08867042.7**

(22) Date de dépôt: **22.12.2008**

(51) Int Cl.:
***B32B 27/10*** *(2006.01)* ***B32B 27/30*** *(2006.01)*
***C08J 7/14*** *(2006.01)*

(86) Numéro de dépôt international:
**PCT/EP2008/068145**

(87) Numéro de publication internationale:
**WO 2009/083525 (09.07.2009 Gazette 2009/28)**

(54) **FILM AUX PROPRIETES BARRIERE A L'EAU, AUX GRAISSES, AU GAZ ET A LA VAPEUR D'EAU**

FILM MIT FLÜSSIGKEIT-WASSER-, FETT-, GAS- UND WASSER-DAMPFSPERREIGENSCHAFTEN

FILM HAVING LIQUID-WATER, GREASE, GAS AND WATER-VAPOUR BARRIER PROPERTIES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.12.2007 FR 0760355**

(43) Date de publication de la demande:
**29.09.2010 Bulletin 2010/39**

(73) Titulaires:
- **Centre Technique Du Papier**
  **38610 Gieres (FR)**
- **Centre National de la Recherche Scientifique (CNRS)**
  **75016 Paris (FR)**

(72) Inventeurs:
- **STINGA, Nicoleta Camelia**
  **F-38000 Grenoble (FR)**
- **SAMAIN, Daniel**
  **F-38240 Meylan (FR)**
- **GUERIN, David**
  **F-63400 Chamaliere (FR)**

(74) Mandataire: **Regimbeau**
**20, rue de Chazelles**
**75847 Paris Cedex 17 (FR)**

(56) Documents cités:
**EP-A- 0 545 228 US-B1- 6 531 196**

- **BIVER C, DE CREVOISIER G, GIRAULT S, MOURRAN A, PIRRI R, RAZET J.C., LEIBLER L: "Microphase separation and wetting properties of palmitate-graft-poly(vinyl alcohol) films" MACROMOLECULES, vol. 35, 2002, pages 2552-2559, XP002479530**

Remarques:
Le dossier contient des informations techniques présentées postérieurement au dépôt de la demande et ne figurant pas dans le présent fascicule.

EP 2 231 401 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un film aux propriétés barrière à l'eau, aux graisses, aux gaz et à la vapeur d'eau ainsi que ses procédés d'obtention. Ce film peut être formé à la surface d'une grande variété de supports afin de modifier les propriétés barrière de ceux-ci. Pour certaines applications dans le domaine de l'emballage alimentaire notamment, le film aux propriétés barrière est formé sur des supports cellulosiques tel que du papier ou du carton.

Actuellement, les emballages barrières (aux gaz, aux arômes) sont le fruit d'assemblage divers : papiers-cartons, aluminium, films synthétiques. Les emballages plastiques offrent des propriétés barrière très variables suivant la nature du polymère utilisé. Pour développer des propriétés barrières plus performantes, des traitements de surface tels que la métallisation ou le dépôt sous vide d'oxydes d'aluminium et d'oxydes de silicium sont parfois réalisés.

Si l'on se réfère à leurs procédés de fabrication, il existe trois catégories d'emballages papiers/cartons : le papier sulfurisé, les complexes, les papiers / cartons enduits.

Le papier sulfurisé ou parchemin végétal offre une excellente barrière aux graisses, une moyenne résistance à l'eau, une bonne résistance à la chaleur mais une barrière modérée aux gaz et aux arômes. Les complexes associent plusieurs matériaux aux propriétés complémentaires : papier / carton (barrière à la lumière, imprimabilité, propriétés mécaniques : rigidité, pliage...), aluminium (barrière à tout, mémoire au pli), polymère (Barrière (gaz, vapeur d'eau, arômes...), thermoscellabilité (PE)). Ces associations sont faites hors ligne par extrusion couchage ou contre collage. Les principaux inconvénients des complexes sont liés aux difficultés d'extrusion de certains polymères, à la présence possible de solvant et à leur coût dû à la réalisation des ces opérations sur des machines hors ligne qui offrent peu de souplesse et de productivité. De plus, ces produits n'offrent pas une biodégradabilité élevée.

Les papiers/cartons enduits sont réalisés par dépose de dispersion aqueuse de produits barrières sur des machines en ligne. Il existe de nombreux procédés de dépose de ces dispersions aqueuses. Les produits déposés appartiennent à trois catégories : les cires, les produits fluorés et les dispersions aqueuses de polymères. Les cires (Paraffine, Cire microcristalline, Mélanges), offrent d'excellentes barrières à l'eau, mais des barrières modérées aux graisses et à la vapeur d'eau. Les cires sont peu chères, apportent rigidité au support et sont thermoscellables, mais elles possèdent une faible résistance au pliage, une faible résistance à la chaleur, sont non biodégradables et difficiles à recycler. Les produits fluorés, peuvent être introduits dans la masse du papier ou déposés en surface. Ils offrent d'excellentes barrières aux graisses, mais des barrières modérées à l'eau et de pauvres barrières aux gaz. Ces produits sont, de plus, non thermoscellables et peuvent poser des problèmes de santé (présence de sous-produits fluorés susceptibles de migrer dans les aliments). Les dispersions aqueuses de polymères mettent en jeu de nombreux polymères, et ont pour objectif de créer une barrière physique (contrairement aux produits fluorés qui offrent une barrière chimique). Cette barrière physique est d'autant meilleure que le film déposé, après séchage, est épais et ne présente pas de défauts.

En outre, il est possible de modifier les propriétés de surface d'un matériau porteur, sur sa surface, de fonctions réactogènes, par un greffage chimique entre ces dernières et des molécules réactives. La réaction chimique entre des acides gras à longue chaîne activés (par exemple des chlorures d'acide) avec des fonctions hydroxyles situées à la surface de matériaux solides est ainsi connue. Cette opération peut être réalisée soit par des techniques classiques de chimie en phase hétérogène solide-liquide (Nathanson A., 1930, Kwatra H. S. and Caruthers J. M., 1992; Vaca Garcia C. et al., 2000 ; Freire C. S. R. et al., 2006) soit par la technique de chimie chromatogénique en phase hétérogène solide-liquide/vapeur. Il se forme, dans tous les cas, une liaison ester entre l'acide gras et les hydroxyles de la surface qui devient alors hydrophobe. Comme la réaction a lieu en phase hétérogène, il est normalement impossible de greffer toutes les fonctions hydroxyles du matériau, notamment celles qui sont situées le plus à coeur.

Le greffage d'acides gras sur des matériaux cellulosiques par les techniques de chimie chromatogénique a été décrit dans le EP1007202. Le caractère partiel de la réaction est bien visible sur les spectres Infra Rouge réalisés en ATR (réflexion totale atténuée) où on visualise, clairement, à la fois la présence de fonctions esters due au greffage d'acides gras et la présence de fonctions hydroxyles non dérivées. Du point de vue fonctionnel, les matériaux traités présentent bien des caractéristiques intéressantes d'hydrophobie mais pas du tout de propriétés de barrière aux graisses ni aux gaz.

Par ailleurs, il est connu que des propriétés barrières aux gaz et aux graisses peuvent être obtenues par une enduction par le PVA (alcool polyvinylique). Son caractère hydrophile et filmogène fait de l'alcool polyvinylique une excellente barrière aux huiles, aux graisses et aux solvants organiques. De même, il est caractérisé par une faible perméabilité aux gaz et à la vapeur d'eau, ainsi que par une complète transparence. Grâce à son caractère hydrophile, il adhère très bien à la cellulose et aux surfaces polaires. Il possède, toutefois, un certain caractère amphiphile qui lui permet de s'adsorber aussi sur des surfaces hydrophobes. Son caractère filmogène, ses propriétés barrière et sa capacité à fonctionner comme agent liant, lui ont permis de trouver de larges applications dans la fabrication du papier et du carton. Quand le papier demande des propriétés plus performantes que celles offertes par l'amidon, l'alcool polyvinylique est appliqué en surface, pour conférer résistance, propriétés barrière et propriétés de surface telles qu'imprimabilité, douceur et brillance, mais aussi pour le contrôle de la porosité du papier. La résistance donnée par l'alcool

polyvinylique permet de remplacer une partie des fibres cellulosiques par des charges minérales ou d'utiliser une quantité plus importante de fibres recyclées, tout en maintenant la résistance et l'imprimabilité du papier. Il peut être utilisé seul ou en combinaison avec l'amidon, ou d'autres additifs afin d'améliorer la résistance au pliage, à la traction, à l'éclatement, ou encore les propriétés optiques et d'imprimabilité des papiers. Ce polymère présente donc des propriétés filmogènes très bonnes et en l'absence d'eau, il possède d'excellentes propriétés de barrière aux graisses et aux gaz. Malheureusement, ces propriétés disparaissent dès que le matériau est en contact avec l'eau liquide ou même avec de la vapeur d'eau en conditions dites tropicales (38°C et 90% HR). Le PVA ne peut donc conserver ses propriétés que s'il est associé à des films barrières à l'eau dans des assemblages complexes (Mallory W., 1996). Cela signifie que ces propriétés seront perdues si le complexe est lavé avec un solvant capable de solubiliser le film barrière à l'eau ou si le complexe est utilisé à des températures supérieures au point de fusion du film barrière à l'eau.

La modification chimique de l'alcool polyvinylique (PVA) a aussi été développée pour altérer ses propriétés chimiques et/ou physiques et augmenter son usage. Chimiquement, l'alcool polyvinylique participe à toutes les réactions spécifiques aux alcools secondaires : l'esterification, l'éthérification etc.. La plus courante modification chimique de l'alcool polyvinylique est l'estérification, mais les polyvinyles esters peuvent être obtenus aussi par polymérisation des vinyles esters. Les agents d'estérification souvent utilisés sont: les acides carboxyliques et les acides carboxyliques activés tels que les chlorures d'acides ou anhydrides. La réaction d'estérification du PVA avec des acides carboxyliques se réalise en général en présence de solvant et de catalyseur.

Ainsi, l'estérification de l'alcool polyvinylique avec des chlorures d'acides gras par voie solvant (diméthyle formamide, N- méthyle pyrolidone, méthyle éthyle cétone et toluène, pyridine etc.) à des températures basses ou élevées est bien connue.

Cependant, ces réactions d'estérification du PVA avec des acides gras ne sont pas des réactions de greffage et de traitement en surface d'un film de PVA afin de modifier ses propriétés barrière.

Mc Carthy et son équipe (Jayaraman K., Shaw Ling Hsu and McCarthy T. J., 2007, "Versatile multilayer thin film preparation using hydrophobic interactions, crystallization and chemical modification of poly(vinyl alcohol)", Langmuir, 23, 3260-3264 et Kozlov M. Quarmyne M., C hen W. and McCrthy T. J., 2003 "Adsorption and chemistry of ultra-thin films of polyvinyl alcohol for sensor development", Polymer Science and Engineering, 44(2),283-284)), estérifient l'alcool polyvinylique, adsorbé en couche fine sur des supports hydrophobes, avec des chlorures d'acides gras à courte chaîne carbonée et à bas point d'ébullition (chlorure d'acide heptafluorobutyrique, chlorures d'acides hexanoique et octanoique) en phase vapeur avec des rendements de 35 à 90% selon la concentration de la solution de PVA et du type de réactant. Les films de PVA utilisés ont une épaisseur de quelques nanomètres et l'estérification se fait dans toute l'épaisseur du film. L'objectif poursuivi par ces auteurs est d'obtenir des films multicouches. Ces films n'ont pas de propriétés barrières mais présentent un intérêt pour le développement de capteurs.

Biver *et al.* décrivent la modification chimique du PVA par des acides palmitiques pour donner un matériau amphiphile capable de s'organiser selon un processus de séparation de phase en deux parties, l'une hydrophobe extérieure et l'autre hydrophile intérieure.

La réaction décrite par Biver *et al.* est conduite en phase homogène dans un solvant la N-méthyl-2-pyrrolidone sous atmosphère inerte. Le PVA est dissous dans ce solvant additionné de pyridine et le réactif, le chlorure d'acide palmitique est ajouté ensuite goutte à goutte. Après 16h de réaction à température ambiante, le PVA modifié est précipité par de l'éther éthylique et lavé extensivement pour éliminer le solvant, la pyridine et le réactif n'ayant pas réagit. Le PVA modifié comprenant entre 1,5 et 17% de degré de modification est ensuite dissous dans le DMO qui est évaporé sous courant d'azote pour donner un matériau amphiphile hydrophobe à l'extérieur et hydrophile à l'intérieur. Selon les auteurs qui l'ont étudié par 13C RMN, la distribution des groupes esters est statistique. Le produit décrit par Biver *et al.* contient une distribution statistique d'ester palmitique. Etant donné que le taux maximal de greffage est de 17%, cela signifie que, dans ce cas, un groupe hydroxyle sur 6 seulement est dérivé.

Biver *et al.* observent un phénomène d'hystérésis important de leur produit qu'ils attribuent à une restructuration de la surface du film. Cette restructuration est due à un phénomène très courant de mobilité rotationnelle. Les films greffés qu'ils obtiennent sont au départ hydrophobe car ils sont séchés dans l'air qui est un medium hydrophobe. Lorsqu'on ajoute de l'eau, les propriétés hydrophobes de la surface de ces films se traduisent par des angles de contact élevés. Toutefois, le système se trouve alors dans une configuration énergétique métastable et il va chercher à évoluer vers une configuration plus stable. Celle-ci est possible par la rotation des molécules de PVA pour masquer les acides gras greffés et mettre en évidence à la place des groupements OH. Ce phénomène est naturellement d'autant plus sensible que les molécules du substrat ont davantage la possibilité de mouvements rotationnels. Il en résulte que les propriétés barrières à l'eau de ces matériaux vont être faibles et surtout décroître avec le temps. Les auteurs ne décrivent pas explicitement les propriétés barrières à l'eau des matériaux qu'ils obtiennent mais il est possible de les déduire d'après la décroissance des angles de contact avec le temps qu'ils ont enregistré.

On connaît également un produit dérivé du PVA, le polyvinyle stéarate (PVS) qui peut être obtenu, soit par estérification de l'alcool polyvinylique, soit par polymérisation du vinyle stéarate. Ce matériau, qui est une spécialité commerciale, ne présente, toutefois, pas du tout les mêmes propriétés que le PVA, dans le sens où il est, au contraire,

très lipophile et c'est même pour cette propriété qu'il est le plus souvent employé. Grâce à son caractère lipophile et à sa basse température de fusion (~50°C), il est notamment utilisé comme texturant des huiles.

D'une manière surprenante, nous avons maintenant montré que l'enduction d'un support avec du PVA suivi par un séchage et un traitement de greffage en surface avec un chlorure d'acide gras à longue chaîne conduisait à l'obtention d'un support possédant à la fois des propriétés barrières à l'eau, aux graisses, aux gaz et à la vapeur d'eau.

L'analyse IR par transmission réalisée sur un film de PVA pur soumis au greffage par le chlorure d'acide stéarique, indique que le PVA est bien dérivé par le chlorure d' acide stéarique de façon à créer des fonctions ester mais, la proportion de celles ci apparaît extrêmement faible. Il s'agit donc d'un phénomène de modification chimique du PVA mais qui est, quantitativement, très limité. Une deuxième analyse par IR a alors été réalisée en ATR sur du papier recouvert d'un film de PVA. Les résultats indiquent que, dans la profondeur d'analyse de l'ATR qui est voisine, dans nos conditions, d'un micron, le PVA est totalement substitué et les spectres obtenus sont superposables à ceux du polyvinyle stéarate commercial. Ces résultats qui contrastent avec ceux obtenus lors du greffage de la cellulose et rapportés dans le brevet EP1007202, auraient pu alors suggérer que nous étions en présence d'un complexe PVS/PVA où les propriétés barrières obtenues auraient été la résultante des propriétés barrières à l'eau du poly vinyle stéarate et des propriétés barrières aux graisses et aux gaz du PVA. Etant donné que le poly vinyle stéarate est soluble dans le chloroforme, nous avons testé cette hypothèse en procédant au lavage extensif, avec ce solvant, des papiers recouverts d'un film de PVA et soumis au greffage par le chlorure d'acide stéarique. Les produits obtenus ont été analysés, à nouveau, par IR/ATR et nous avons observé, de manière surprenante, que le lavage éliminait bien une couche de poly vinyle stéarate présente à la surface du matériau mais qu'il ne modifiait ni l'allure des spectres IR/ATR, ni l'ensemble des propriétés barrières, à l'eau, aux graisses et aux gaz. De manière encore plus surprenante, nous avons observé que ces résultats étaient dépendants de la nature chimique des PVA utilisés, en particulier de leur poids moléculaire et de leur taux de dé-acétylation. Plus précisément, nous avons observé que, plus les PVA possédaient un poids moléculaire faible et plus ils contenaient d'acétate résiduels, plus ils présentaient une couche importante de PVS extractible (toutes choses étant égales par ailleurs) et moins ils présentaient de bonnes propriétés barrières avant et surtout après extraction par le chloroforme. A l'inverse, le PVA ne contenant pratiquement plus d'acétate et avec un poids moléculaire plus important ne présentait qu'une couche faible de PVS et ses propriétés barrières étaient pratiquement non affectées par le lavage. De même, nous avons observé que les propriétés barrières et la quantité de PVS extractible augmentait logiquement avec le temps de la réaction mais, de façon surprenante, de façon distincte selon la nature chimique des PVA. Ces résultats nous ont amené à formuler l'hypothèse suivante.

Le greffage des films de PVA par des chlorures d'acides gras à longue chaîne conduit à un matériau présentant quatre compartiments distincts (figure 1). La structure de ces compartiments pouvant être variables en fonction des conditions de mise en oeuvre et de la nature chimique des PVA utilisés.

Ces compartiments sont classés de I à IV de l'extérieur du matériau vers l'intérieur.

I) Il est constitué de la couche de PVS extractible par le chloroforme. C'est-à-dire des macromolécules de PVA entièrement greffées avec des acides gras

II) Il est constitué d'une couche de PVS non extractible. Ce sont des segments de macromolécules de PVA qui sont greffées avec des acides gras.

III) Il est constitué symétriquement de l'ensemble des segments de PVA non greffés

IV) Il est constitué d'une couche de PVA complètement non greffée.

Les compartiments II et III sont donc constitués de molécules de PVA séquentiellement greffées avec un acide gras.

On entend, par greffage séquentiel, un greffage dans lequel la molécule de PVA est constituée de segments de taille variable, alternativement greffés et non greffés. Le compartiment II est constitué de l'ensemble des segments de PVA greffés et le compartiment III est constitué de l'ensemble des segments de PVA non greffés.

Une autre façon de visualiser le résultat du greffage est d'imaginer la réaction du chlorure d'acide gras avec la couche de PVA comme un front qui progresse de l'extérieur vers l'intérieur du matériau.

Au départ, avant le début de la réaction, nous ne sommes, bien sûr, en présence que du compartiment IV, le PVA pur. La progression du front de greffage va ensuite conduire à la formation progressive et simultanée des compartiments II et III. Une progression excessive va enfin conduire à la formation du compartiment I.

Dans ce schéma, le véritable matériau barrière est constitué des compartiments II et III qui comprennent les mêmes macromolécules de PVA mais constituées de segments greffées d'un côté et non greffées de l'autre. Le compartiment I n'est que le résultat d'un greffage excessif, et, comme nous l'avons vu, il n'est pas nécessaire pour l'obtention des propriétés barrières puisqu'il peut être éliminé par lavage sans altération de ces propriétés. Le compartiment IV assure le lien avec le support et est responsable de l'homogénéité de la surface. En dehors de cette fonction particulière, son épaisseur n'a aucune importance et elle peut être réduite au minimum technologiquement réalisable.

Ce schéma permet d'expliquer les résultats surprenants obtenus. Comme la zone réellement barrière est

constituée des mêmes macromolécules possédant des segments greffés et non greffés par des acides gras, plus ces macromolécules seront longues et plus la zone barrière sera épaisse conduisant à une meilleure efficacité de barrière. De même, des macromolécules longues seront plus difficiles à extraire que des courtes, car ces molécules longues sont plus susceptibles de présenter des segments non greffés. Cet aspect est particulièrement bien mis en évidence par les résultats d'IR-ATR sur les PVA 498 (PM 30 000) et 2899 (PM 145 000) où, après lavage, on visualise bien une proportion plus grande d'hydroxyles sur le PVA 498. Ceci traduit une épaisseur plus faible de la couche barrière active. De façon logique, les propriétés barrières sont donc également moins bonnes avec le 498. Ces deux résultats sont bien en accord avec une zone barrière plus épaisse obtenue avec le 2899.

Enfin, la qualité des résultats obtenus pour les propriétés barrière va dépendre de la qualité du front de progression du réactif. Celle-ci va dépendre des propriétés initiales de barrières aux graisses et aux gaz du matériau. Des propriétés de barrières moyennes vont conduire à une diffusion excessive et hétérogène du réactif dans toute l'épaisseur du matériau. On aura donc simultanément un fort taux de greffage associé à des propriétés barrières mineures.

Lorsque le support est un matériau cellulosique comme le papier, il est possible d'obtenir des propriétés barrières particulièrement intéressantes pour les applications dans le domaine de l'emballage et notamment de l'emballage alimentaire.

**Description de l'invention**

L'invention se rapporte à un film ayant des propriétés barrière à l'eau, aux graisses, aux gaz et à la vapeur d'eau comprenant :

- un film de PVA, le PVA ayant une masse molaire supérieure à 13 000 g/mol et un degré d'hydrolyse supérieur à 81%,
- séquentiellement greffé en surface avec un acide gras ayant une chaine aliphatique comprenant au moins 12 atomes de carbone.

Dans un premier mode de réalisation, le film ayant des propriétés barrière à l'eau, aux graisses, aux gaz et à la vapeur d'eau selon l'invention comprend :

- un film de PVA, le PVA ayant une masse molaire supérieure à 13 000 g/mol et un degré d'hydrolyse supérieur à 81%,
- une couche non extractible avec du chloroforme, comprenant des molécules de PVA, ayant une masse molaire supérieure à 13 000 g/mol et un degré d'hydrolyse supérieur à 81%, séquentiellement greffées avec un acide gras ayant une chaine aliphatique comprenant au moins 12 atomes de carbone.

Dans un deuxième mode de réalisation, le film ayant des propriétés barrière à l'eau, aux graisses, aux gaz et à la vapeur d'eau selon l'invention comprend :

- un film de PVA, le PVA ayant une masse molaire supérieure à 13 000 g/mol et un degré d'hydrolyse supérieur à 81%,
- une couche non extractible avec du chloroforme, comprenant des molécules de PVA, ayant une masse molaire supérieure à 13 000 g/mol et un degré d'hydrolyse supérieur à 81 %, séquentiellement greffées avec un acide gras ayant une chaine aliphatique comprenant au moins 12 atomes de carbone,
- une couche extractible avec du chloroforme, comprenant des molécules de PVA, ayant une masse molaire supérieure à 13 000 g/mol et un degré d'hydrolyse supérieur à 81%, entièrement greffées avec un acide gras ayant une chaine aliphatique comprenant au moins 12 atomes de carbone.

De préférence, la couche non extractible avec du chloroforme a une épaisseur comprise entre 0,1 $\mu$m et 1 $\mu$m.

Préférentiellement, le film de PVA a une épaisseur supérieure à 0,05 $\mu$m.

Avantageusement, le PVA a une masse molaire de 145 000 g/mol.

Dans un mode de réalisation avantageux, le PVA a un degré d'hydrolyse d'au moins 87%.

Préférentiellement, l'acide gras est un acide gras ayant une chaine aliphatique comprenant 16 à 22 atomes de carbone.

Plus préférentiellement, l'acide gras est choisi dans le groupe comprenant l'acide stéarique, l'acide palmitique et l'acide béhénique.

L'invention a également pour objet un support portant un film aux propriétés barrière selon l'invention.

Dans un mode de réalisation particulier, le support selon l'invention est constitué d'un matériau cellulosique.

L'invention concerne aussi un procédé de formation d'un film, ayant des propriétés barrière à l'eau, aux graisses, aux gaz et à la vapeur d'eau, à la surface d'un support comprenant les étapes suivantes :

- enduction du support avec du PVA pour former un film de PVA à la surface du support, le PVA ayant une masse

molaire supérieure à 13 000 g/mol et un degré d'hydrolyse supérieur à 81%;

- séchage du film de PVA ;
- greffage d'au moins un acide gras ayant une chaine aliphatique comprenant au moins 12 atomes de carbone en surface du film de PVA.

Dans un mode de réalisation particulier, le support est un matériau cellulosique et le procédé comprend une étape de calandrage après l'étape de séchage du film de PVA.

Avantageusement, l'enduction permet le dépôt d'un film PVA d'une épaisseur supérieure à 0,1 μm sur la surface du support.

Dans un mode de réalisation avantageux de l'invention, le greffage de l'acide gras est effectué par estérification en phase hétérogène avec un chlorure d'acide gras ayant une chaine aliphatique comprenant au moins 12 atomes de carbone.

De préférence, l'acide gras est un acide gras en ayant une chaine aliphatique comprenant 16 à 22 atomes de carbone.

Plus préférentiellement, l'acide gras est choisi dans le groupe comprenant l'acide stéarique, l'acide palmitique et l'acide béhénique.

Dans un mode de réalisation préféré, le greffage est effectué avec du chlorure d'acide stéarique.

L'invention a aussi pour objet un film aux propriétés barrière susceptible d'être obtenu par le procédé selon l'invention.

La présente invention concerne donc un film aux propriétés barrière et ses procédés d'obtention.

Par « film », on entend une couche de faible épaisseur d'un matériau. Dans la pratique, l'épaisseur d'un film est de l'ordre du μm jusqu'à quelques dizaines de μm.

Par « film aux propriétés barrière », on entend une couche de faible épaisseur d'un matériau conférant au support sur lequel il est déposé des propriétés barrière.

Par « propriétés barrière », on entend des propriétés d'isolation contre l'eau, les graisses, les gaz ou la vapeur d'eau qui caractérisent par exemple un support d'emballage.

Par « propriété barrière à l'eau », on entend la perméabilité à l'eau telle que mesurée par le test de Cobb. Une valeur proche de 0 montre que le film a de bonnes propriétés barrière à l'eau.

De préférence, les films barrière de la présente invention ont une valeur de $Cobb_{60}$ inférieure à 10 et de préférence inférieure à 5.

Par « propriété barrière aux graisses », on entend la résistance aux graisses telle que mesurée par la méthode TAPPI.

De préférence, les films barrière de la présente invention ont une résistance aux graisses supérieure à 10 telle que mesurée par le Kit test/méthode TAPPI.

Par « propriétés barrière aux gaz », on entend la perméabilité aux gaz, à l'oxygène, à l'azote, au $CO_2$ et à l'air. Plus la perméabilité aux gaz est faible, plus le film a de bonnes propriétés barrière aux gaz.

Par « propriétés barrière à la vapeur d'eau », on entend la perméabilité à la vapeur d'eau telle que mesurée dans la norme ISO2528.

De préférence, les films barrière de la présente invention répondent à la norme ISO2528.

Par « film de PVA », on entend une couche de PVA de faible épaisseur ayant une masse volumique comprise entre 1000 et 1300 kg/m$^3$. Dans la présente invention, les films de PVA ont typiquement une épaisseur supérieure à 0,05μm. Typiquement, l'épaisseur du film est comprise entre 0,05-25 μm, 0,05-15 μm, et 0,05-10 μm, et de préférence entre 5-10 μm.

Par « PVA », on entend l'alcool polyvinylique. Il est typiquement obtenu par polymérisation radicalaire de l'acétate de vinyle dans le méthanol, suivie de l'alcoolyse. En fonction de degré d'hydrolyse une certaine quantité d'acétate reste attachée à la chaîne de polymère. Le PVA est donc caractérisé par sa masse molaire et son degré d'hydrolyse.

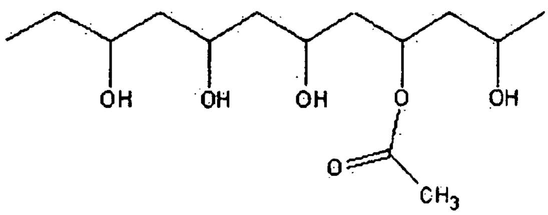

Schéma simplifié d'une molécule de PVA

Dans les films barrière de la présente invention, le PVA a de préférence une masse molaire compris entre 13 000 et 300 000 g/mol, 30 000 et 300 000 g/mol, 50 000 et 200 000 g/mol, 75 000 et 200 000 g/mol, 100 000 et 200 000 g/mol. Dans un mode de réalisation particulièrement avantageux, le PVA a une masse molaire de 145 000 g/mol.

Dans les films barrière de la présente invention, le PVA présente de préférence un degré d'hydrolyse supérieur à 81%, 85%, 88%, 90%, 95%, 98% et plus préférentiellement supérieur à 99%.

Le film de PVA peut également comprendre des charges telles que du kaolin. De préférence ces charges ne modifient pas ou peu les propriétés barrières. De préférence, le PVA représente au moins 50%, 60 %, 70%, 80%, 90%, 95% du film de PVA. Dans un mode de réalisation préféré de l'invention le film de PVA est constitué à 100% de PVA.

Dans les films aux propriétés barrière de la présente invention, les films de PVA sont greffés en surface avec des acides gras. Après greffage en surface de l'acide gras, le film aux propriétés barrière a de préférence une épaisseur totale supérieure à 0,05 μm et préférentiellement comprise entre 0,05 et 30 μm.

Par « acide gras », on entend un acide organique composé d'une chaîne hydrocarbonée linéaire terminée à l'une de ses extrémités par un groupement carboxylique et à l'autre extrémité par un groupement méthyle. Les acides gras utilisés pour le greffage sont des acides gras ayant une chaine aliphatique comprenant au moins 12 atomes de carbone. De préférence, l'acide gras est un acide gras ayant une chaine aliphatique comprenant 12 à 30 atomes de carbone. Préférentiellement, l'acide gras est un acide gras ayant une chaine aliphatique comprenant 16 à 22 atomes de carbone. Préférentiellement, l'acide gras est un acide gras saturé. Dans un mode de réalisation préféré de l'invention, l'acide gras est choisi parmi l'acide stéarique, l'acide palmitique et l'acide béhénique. De préférence, le greffage est effectué avec de l'acide stéarique.

Par greffage, on entend l'établissement de liaisons covalentes entre le PVA et les acides gras à la surface du film de PVA. Le greffage s'effectue typiquement par l'estérification en phase hétérogène de la surface du film de PVA avec les acides gras. Le greffage en surface du film de PVA se traduit au niveau moléculaire par un greffage séquentiel des molécules de PVA à la surface du film.

On entend, par greffage séquentiel, un greffage dans lequel la molécule de PVA est constituée de segments alternativement greffés et non greffés. Les segments greffés forment une phase continue de PVA greffé qui est dirigée vers l'extérieur du matériau. Les segments non greffés forment également une phase continue mais dirigée vers l'intérieur du matériau.

Le greffage de l'acide gras s'effectue à la surface et dans une certaine épaisseur du film mais elle n'a pas lieu dans toute l'épaisseur du film de PVA. On observe un front de greffage qui progresse de l'extérieur vers l'intérieur du matériau. En deçà du front de greffage, celui-ci est quantitatif et tous les groupements hydroxyles du PVA sont greffés. Au delà du front de greffage, les groupements hydroxyles du PVA ne sont pas greffés. Il existe donc au niveau du front de greffage des molécules de PVA dont des segments se trouvent en deçà du front et qui sont totalement greffés et des segments qui sont au-delà et qui ne sont pas greffés. La présence, au sein d'une même molécule de PVA de segments greffés et non greffés, modifie complètement son régime de solubilité car elle n'est alors ni soluble dans les solvants usuels du PVA (l'eau) ni dans les solvants usuels du PVS (chloroforme).

Dans le cas où on laisse la réaction se poursuivre au-delà de ce qui est nécessaire, on assiste à une progression excessive du front de greffage qui conduit à la présence, en surface, de molécules de PVA qui ne possèdent plus de segments non dérivés et qui deviennent, dès lors, solubles dans les solvants usuels du PVS, tels que le chloroforme. Il n'est usuellement pas nécessaire d'éliminer le PVS éventuellement en excès mais l'homme de l'art saura, en ajustant les conditions expérimentales, éviter que celui-ci ne se forme.

Avantageusement, une seule face du film de PVA est greffée en surface avec un acide gras, l'autre face étant accolée à un support.

Un autre objet de la présente invention est un support portant un film aux propriétés barrière selon la présente invention. Dans un mode de réalisation préféré, le support porte ledit film aux propriétés barrière sur une seule face. Alternativement, le support peut porter le film barrière sur toutes ces faces.

Par « support », on entend tout matériau, substrat ou objet pouvant être recouvert d'un film de PVA. Grâce à ses propriétés filmogènes, le PVA peut s'adsorber aussi bien sur des supports hydrophiles que sur des supports hydrophobes.

Le support portant un film aux propriétés barrière acquiert donc des propriétés barrière à l'eau, aux graisses, aux gaz et à la vapeur d'eau.

Selon un mode de réalisation préféré de l'invention, le support est un support d'emballage papier et ou carton tels que les papiers industriels spéciaux, le papier d'impression et d'écriture, le papier journal, le carton, les papiers d'emballage souple ou le papier pour ondulé. Selon un mode de réalisation particulièrement avantageux de l'invention, le support est un matériau cellulosique d'emballage tel que le papier pour emballage souple et le carton plat.

Avant la formation du film aux propriétés barrières sur le support, il peut être avantageux d'appliquer une sous-couche d'un autre matériau sur le support. L'application d'une sous-couche permet par exemple, de combler ou de lisser les irrégularités du support. L'application d'une sous-couche présente par exemple, un intérêt dans le cas d'un support poreux. Grâce à l'application d'une sous couche, il est ensuite possible de former un film aux propriétés barrière

de très faible épaisseur. L'épaisseur du film de PVA peut alors être réduite de manière significative.

Avantageusement, on applique une sous couche d'amidon avant de former le film aux propriétés barrière lorsque le support est un matériau de type cellulosique.

Parmi les matériaux utilisables comme sous-couche, on citera notamment les amidons, les latex, les protéines, les dérivés cellulosiques (Carboxymethyl Celluloses par exemple) et toutes les combinaisons possibles de ces produits en mélange avec ou sans charges minérales telles que les Carbonates de calcium, les kaolins, les talcs, et autres pigments connus de l'homme du métier.

Un autre objet de la présente invention est un procédé de formation *in situ* d'un film aux propriétés barrière sur la surface d'un support.

Généralement, la première étape du procédé consiste en l'enduction de la surface du support avec du PVA. L'enduction du support avec le PVA est effectuée selon des méthodes connues. Typiquement, l'enduction est effectuée avec une solution aqueuse de PVA en appliquant des techniques bien connues de l'homme du métier. On citera notamment les presses encolleuses (« size press » ou « metering size press »), les coucheuses à lame, les coucheuses à crayon, les coucheuses à lame d'air et les coucheuses à rideau. Pour l'obtention de bonnes propriétés barrière, il est préférable d'appliquer un film homogène de PVA.

Ensuite, on procède au séchage du film de PVA. Le séchage peut par exemple être effectué à l'aide seule ou combinée de fours à air chaud, de fours à rayonnements infrarouges, de cylindres sécheurs.

L'étape suivante de greffage de l'acide gras s'effectue *in situ* sur le support portant le film de PVA.

Typiquement, le greffage de l'acide gras sur le film de PVA s'effectue par estérification en phase hétérogène. Etant donné que le greffage est effectué en phase hétérogène, seuls les OH accessibles en surface du film de PVA sont greffés avec un acide gras. Le greffage ne s'effectue pas dans toute l'épaisseur du film. Toutefois, la progression du front de greffage permet au réactif de pénétrer dans l'épaisseur du matériau car il se solubilise alors dans la phase PVS superficielle créée par la réaction du chlorure d'acide avec le PVA de surface.

Avantageusement, le greffage est effectué avec un acide gras activé afin d'obtenir un greffage satisfaisant sur les groupes hydroxyles du film de PVA dans un temps de greffage assez court. L'acide gras activé est par exemple, un chlorure d'acide gras.

Le greffage est effectué selon des techniques bien connues de l'homme du métier par exemple dans des conditions de solvants aprotique comme le toluène ou l'éther de pétrole en présence d'un réactif du type chlorure d'acide et d'un catalyseur de type pyridine. Le greffage peut aussi être effectué par les techniques de chimie chromatogénique (EP1007202). Cette technique utilise également des réactifs du type chlorure d'acide mais en l'absence de solvant et de catalyseur pendant la phase de greffage.

Dans les méthodes de chimie chromatogénique, le greffage est effectué à une température supérieure à la température de fusion de l'acide gras et inférieure à la température de fusion du PVA. Préférentiellement, le greffage est effectué entre 70°C et 185°C. Le greffage des chlorure d'acide gras est de préférence effectuée sous un balayage d'azote avec une légère dépression (900mbar) afin d'éliminer l'acide chlorhydrique formé pendant la réaction.

Un temps de greffage de 30 secondes permet d'obtenir une amélioration significative des propriétés barrière. De préférence, le temps de greffage est inférieur à 5 minutes, préférentiellement inférieur à 2 minutes et plus préférentiellement inférieur à 1 minute.

Le greffage peut donc être effectué selon différents procédés bien connus de l'homme du métier. En fonction du procédé de greffage choisi, l'homme du métier saura déterminer les conditions de réactions (quantité de réactif, temps de réaction, température, etc.) afin d'obtenir un greffage permettant la formation d'une couche de molécules de PVA séquentiellement greffées non extractibles avec un solvant organique.

En cas de « sur-greffage », il se formera en plus une couche de molécules de PVA entièrement greffées dont tous les groupements OH sont substitués. Cette couche est extractible avec un solvant organique. Elle n'est pas nécessaire à l'obtention des propriétés barrière. Sa présence n'altère pas les propriétés barrières obtenues grâce à la couche sous-jacente non extractible avec un solvant organique.

Pour certains supports, notamment lorsque le support est un support cellulosique de type papier, le procédé de formation *in situ* d'un film aux propriétés barrières sur le papier peut comprendre une étape de calandrage. Par « calandrage », on entend une opération effectuée au moyen d'une calandre sur le papier ou le carton séchés au moins partiellement et destinée à en améliorer l'état de surface. Cette opération permet, également, dans une certaine mesure, de régulariser l'épaisseur du matériau. En papeterie, l'opération de calandrage permet d'obtenir différents états de surface de la feuille de papier, notamment pour les papiers couchés. Selon que le papier est plus ou moins calandré (pression, température de chauffe), le papier est plus ou moins lisse et brillant. L'étape de calandrage s'effectue de préférence après l'enduction avec le PVA et le séchage.

Les figures et exemples ci-dessous illustrent l'invention. Etant entendu que l'invention n'est pas limitée aux réalisations décrites.

**Figures**

Figure 1 : Schéma de greffage du PVA.

Figure 2 : Spectres IRTF- montage en transmission - des films d'alcool polyvinylique non greffés et greffés avec du C18 : a). Mowiol 4 88, b). Mowiol 4 98, c). Mowiol 28 99 : (......) - film non greffé, (......) - film greffé côté recto, (- - - ) - film greffé côté verso.

Figure 3 : Spectres IRTF-ATR du polyvinyle stéarate et des films d'alcool polyvinylique: a) Mowiol 4 88, b) Mowiol 4 98, c) Mowiol 28 99, avant et après le greffage avec du C18 ainsi qu'après le lavage des films greffés avec du chloroforme.

Figure 4 : Variation de l'angle de contact en fonction de temps de greffage.

**Exemples**

### 1. Matériel utilisé

#### 1.1. Type de polymère

Alcool polyvinylique fourni par **Kuraray Specialities Europe®** sous la marque **Mowiol™**. Nous avons utilisé trois types de Mowiol™ dont le degré d'hydrolyse diffère. Les propriétés de ces alcools polyvinyliques se trouvent dans le Tableau 1:

**Tableau 1 :** Propriétés alcools polyvinyliques.

| Type PVA | Viscosité 1) DIN 53015 (mPa.s) | Degré d'hydrolyse (saponification) (mol.-%) | Masse molaire (g/mol) | Contenu d'acétyle résiduel (w/w-%) | Contenu 2) max de cendres (%) |
|---|---|---|---|---|---|
| Mowiol™ 4-88 (PVA partial hydrolysé) | 4 ± 0,5 | 87,7 ± 1,0 | ~ 31 000 | 10,8 ± 0,8 | 0,5 |
| Mowiol™ 4-98 (PVA entièrement hydrolysé) | 4,5 ± 0,5 | 98,4 ± 0,4 | ~27 000 | 1,5 ± 0,4 | 0,5 |
| Mowiol™ 28-99 (PVA entièrement hydrolysé) | 28 ± 2,0 | 99,4 ± 0.4 | ~ 145 000 | 0,6 ± 0,4 | 0,5 |

Remarque :
1) mesurée pour une solution aqueuse de 4% à 20°C
2) calculé comme $Na_2O$

#### 1.2. Agent de greffage

Chlorure d'acide stéarique fourni par Aldrich Chemical Company®.

#### 13. Type de support cellulosique

#### 1.3.1. Carton

Le carton Performa Natura® a été fourni par Smurfit Kappa et il est constitué de 5 strates, un double couchage sur la face à imprimer, ensuite il y a une couche de pâte sulfate blanchie, suivi par une couche de mélange de pâte sulfate blanchie et de pâte CMT blanchie et, une arrière couche de pâte sulfate blanchie.

Dans le Tableau 2 sont regroupées les propriétés du carton données par le fournisseur.

**Tableau 2 :** Propriétés carton.

| Grammage ($g/m^2$) ISO 536 | Epaisseur (µm) ISO 534 | Humidité (%) ISO 287 | Degré de blancheur C/2° (%) ISO 2470 | Rugosité (ml/min) ISO 8791-2 | Brillant (%) ISO 8791-4 |
|---|---|---|---|---|---|
| 255 | 350 | 7 | 85 | 60 | 45 |

**1.3.2. Papier**

Il s'agit d'un papier, utilisé en général pour les emballages flexibles, traité avec des agents de collage pour améliorer la résistance à l'eau.
Les propriétés du papier sont schématisées dans le Tableau 3 :

**Tableau 3 :** Propriétés papier.

| Grammage ($g/m^2$) | Epaisseur (µm) ISO 534 | Humidité (%) ISO 287 |
|---|---|---|
| 41 | 54 | 6 |

2. **Méthodes de traitement**

**Greffage par chimie chromatogénique**

Ce greffage peut être mis en oeuvre de deux façons, soit en déposant le réactif de façon homogène à la surface du matériau avec des procédés dérivés de ceux utilisés dans l'impression (flexographie ou héliographie) soit en immergeant l'échantillon à traiter dans une solution de chlorure d'acide dissout dans un solvant aprotique, anhydre, apolaire et volatil de type éther de pétrole ou solvant halogéné. Dans le premier cas, l'échantillon est placé directement dans une enceinte sous légère dépression, ventilée par un léger courant d'azote et à une température variant entre 70 et 185°C. Dans le deuxième cas, on laisse d'abord le solvant volatil s'évaporer avant de placer l'échantillon dans l'enceinte ventilée. La deuxième méthode est plus facile à réaliser au laboratoire mais elle présente l'inconvénient de traiter les deux faces du matériau et d'exposer celui-ci à un solvant organique.
Comme il n'est pas toujours possible de savoir exactement quelle est la quantité de réactif qui va être consommée par la réaction, on procède en déposant délibérément un excès de réactif à la surface du matériau à traiter puis, après un certain temps, on élimine le réactif en excès ou dégradé avec de l'éthanol qui est un non solvant du PVA et du PVA greffé.
Exemple de dépose de réactifs par procédé héliographique.
Nous avons utilisé un prototype de laboratoire possédant une tête d'enduction héliographique avec chambre à racle fabriqué par la sociétéAPM (Atelier de Précision Mécanique), 4, rue des Orfevres, 31700, Cornebarrieu et des rouleaux anilox en céramique fabriqués par la société Cylindres : BAT Graphics (M. Bachkine), 8 Allée Skylab, 87068 Limoges, permettant de déposer des volumes de réactifs compris entre 50µL et 2mL /m2. L'appareil, qui a été mis au point à l'occasion du programme européen Phycello auquel participait le CERMAV, est hébergé au laboratoire du Génie chimique à Toulouse avec qui nous avons une collaboration régulière. Le prototype est un système dérouleur/enrouleur qui possède une largeur de laize de 20cm et qui tourne à une vitesse de 20mètres/minute.
La dépose du chlorure d'acide stéarique est réalisée à 25°C sur la face recouverte de PVA, les échantillons sont ensuite immédiatement placés dans une étuve à 150°C sous légère dépression (900mbar) et avec un léger balayage d'azote pour favoriser l'élimination de l'acide chlorhydrique formé pendant la réaction. Le temps d'étuvage varie entre 30s et 10min.
Exemple de dépose de réactifs par immersion.
On prépare une solution de chlorure d'acide stéarique dans de l'éther de pétrole anhydre, 100 /140. La concentration de réactif est comprise entre 0,1 et 1% p/p. On immerge brièvement l'échantillon à traiter dans la solution puis on le retire, on évapore l'éther de pétrole et on place l'échantillon comme précédemment, dans une étuve ventilée.

**3. Appareil de dépose de la couche de polymère**

La dépose de la couche de polymère a été réalisée à l'aide du banc d'enduction de laboratoire « EnduPap » mis au point au CTP (Centre Technique du Papier - *P. Vallette et G. Gervason, 1976)* qui permet à la fois la dépose de la couche de polymère à différents poids de couche mais aussi le séchage du papier sous infra rouge.

**4. Mesures réalisées**

**4.2. Perméabilité à l'eau**

En papeterie pour qu'un matériau soit considéré comme barrière à l'eau, les valeurs obtenues pour la mesure du $Cobb_{60}$ doivent être inférieures à 10. Une valeur proche de zéro montre que le matériau a de propriétés barrière exceptionnelles.

**4.2.1. Cobb 60 s**

Le **test Cobb - norme française - NF Q 03-018 -** a été utilisé pour déterminer la quantité d'eau absorbée par le papier ou le carton couchés et non couchés et greffés ou non greffés.
Les 3 types de PVA ont été utilisés pour le couchage des supports cellulosiques.
Un temps de 60s a été choisi pour la mesure de la quantité d'eau absorbée par mettre carré.
La perméabilité à l'eau a été mesurée sur du papier et carton couchés avec des poids de couches différents. Ainsi le papier à été couché à des poids de couche de 3, 6 et 9 g/m$^2$ tandis que le carton a été couché avec des couches de 3, 6, 9 et 15 g/m$^2$.
Ces matériaux ont été ensuite greffés avec du chlorure d'acide stéarique ($C_{17}$.COCl).

**4.2.1.1. Carton**

Les résultats obtenus pour le carton sont regroupés dans le Tableau 5 :

**Tableau 5 :** Quantité d'eau absorbée (g/m$^2$) pendant un temps de 60s par le carton couché avec du PVA et greffé avec de l'acide stéarique ou pas.

| Type alcool polyvinylique | $Cobb_{60}$ (g/m$^2$) | | | | | Ecart type (g/m$^2$) | | | | |
|---|---|---|---|---|---|---|---|---|---|---|
| Poids de couche (g/m$^2$) | 0 | 3 | 6 | 9 | 15 | 0 | 3 | 6 | 9 | 15 |
| Mowiol™ 4 88 | 24 | 29 | 27 | 23 | 20 | 0,7 | 0,9 | 2,1 | 2,1 | 5,8 |
| Mowiol™ 4 88 C18 | 14 | 14 | 13 | 4 | 0 | 1,5 | 2,8 | 1,8 | 0,9 | 0,1 |
| Mowiol™ 4 98 | 24 | 26 | 26 | 23 | 9 | 0,7 | 0,9 | 0,9 | 0,8 | 2,3 |
| Mowiol™ 4 98 C18 | 14 | 16 | 11 | 3 | 0 | 1,5 | 3,7 | 1,0 | 1,1 | 0,2 |
| Mowiol™ 28 99 | 24 | 24 | 18 | 18 | 14 | 0,7 | 1,4 | 3,0 | 4,4 | 5,3 |
| Mowiol™ 28 99 C18 | 14 | 3 | 0 | 0 | 0 | 1,5 | 2,1 | 0,5 | 0,2 | 1,0 |

**4.2.1.2. Papier**

Les résultats des mesures de Cobb réalisées sur le papier couché avec les trois types du PVA qui ensuite ont subi ou non un greffage sont regroupés dans le Tableau 6 :

**Tableau 6 :** Quantité d'eau absorbée (g/m$^2$) pendant un temps de 60s par le papier couché avec du PVA et greffé avec de l'acide stéarique ou pas.

| Type alcool polyvinylique | $Cobb_{60}$ (g/m$^2$) | | | | Ecart type (g/m$^2$) | | | |
|---|---|---|---|---|---|---|---|---|
| Poids de couche (glm$^2$) | 0 | 3 | 6 | 9 | 0 | 3 | 6 | 9 |
| Mowiol™ 4 88 | 18 | 18 | 16 | 10 | 0,4 | 2,2 | 1,8 | 1,5 |
| Mowiol™ 4 88 C18 | 10 | 4 | 1 | 0 | 1,1 | 0,4 | 0,2 | 0,3 |
| Mowiol™ 4 98 | 18 | 25 | 25 | 19 | 0,4 | 1,7 | 0,6 | 1,2 |

(suite)

| Type alcool polyvinylique | Cobb$_{60}$ (g/m$^2$) | | | | Ecart type (g/m$^2$) | | | |
|---|---|---|---|---|---|---|---|---|
| Poids de couche (glm$^2$) | 0 | 3 | 6 | 9 | 0 | 3 | 6 | 9 |
| Mowiol™ 4 98 C18 | 10 | 2 | 2 | 1 | 1,1 | 0,5 | 0,8 | 0,1 |
| Mowiol™ 28 99 | 18 | 21 | 20 | 13 | 0,4 | 0,7 | 0,8 | 3,1 |
| Mowiol™ 28 99 C18 | 10 | 1 | 0 | 0 | 1,1 | 0,3 | 0,2 | 0,2 |

Nous observons que le carton ainsi que le papier, couchés avec du PVA et ensuite greffés avec le chlorure d'acide stéarique, donnent de bonnes barrières à l'eau, un indice Cobb de 0 étant obtenu pour les poids de couche les plus élevés.

**4.2.2. Cobb 5 et 30 minutes.**

Pour déterminer la résistance de ces matériaux à une exposition prolongée à l'eau des mesures de Cobb de 5 et 30 minutes ont été réalisées.

**4.2.2.1. Carton**

Les résultats obtenus pour le carton couché avec 15 g/m$^2$ du PVA se trouvent dans le Tableau 7.

**Tableau 7 :** Quantité d'eau absorbée (g/m$^2$) par le carton couché avec du PVA et greffé avec de l'acide stéarique après une exposition à l'eau de 5 et 30 minutes.

| Type de couche | Temps (sec) | Cobb (g/m$^2$) | Ecart type (g/m$^2$) |
|---|---|---|---|
| Mowiol™ 4 88 C18 | 60<br>300<br>1800 | 0<br>2<br>13 | 0,1<br>0,9<br>2,2 |
| Mowiol™ 28 99 C18 | 60<br>300<br>1800 | 0<br>1<br>8 | 1,0<br>0,6<br>2,0 |

**4.2.2.2. Papier**

Les mêmes mesures que pour le carton ont été réalisées pour le papier.
Les résultats obtenus sont regroupés dans Tableau 8 :

**Tableau 8 :** Quantité d'eau absorbée (g/m$^2$) par le papier couché avec du PVA et greffé avec de l'acide stéarique après une exposition à l'eau de 5 et 30 minutes.

| Type de couche | Temps (sec) | Cobb (g/m$^2$) | Ecart type (g/m$^2$) |
|---|---|---|---|
| Mowiol™ 4 88 C18 | 60<br>300<br>1800 | 0<br>3<br>25 | 0,2<br>0,9<br>1,4 |
| Mowiol™ 4 98 C18 | 60<br>300<br>1800 | 1<br>9<br>19 | 0,1<br>4,6<br>2,0 |
| Mowiol™ 28 99 C18 | 60<br>300<br>1800 | 0<br>2<br>8 | 0,2<br>1,0<br>0,5 |

On remarque que, pour le PVA le plus hydrolysé et de plus haute masse molaire, la valeur du Cobb reste inférieure à 10 g/m$^2$, aussi bien pour le carton que pour le papier, même après une exposition à l'eau de 30 minutes. Ceci veut dire que plus le PVA est hydrolysé, meilleure est l'effcacité du greffage et donc meilleure est la barrière à l'eau. A l'inverse, les PVA moins hydrolysés et de plus basse masse molaire, présentent des valeurs de Cobb qui augmentent fortement avec le temps.

**4.3. Perméabilité à la vapeur d'eau - norme ISO 2528**

**4.3.1. Perméabilité à la vapeur d'eau mesurée à 23°C et 50% HR**

**Tableau 9** : Perméabilité à la vapeur d'eau des papiers couchés avec 9 g/m$^2$ de différents types d'alcool polyvinylique mesurée avant et après le greffage avec du chlorure d'acide stéarique.

| Type de couche | Coefficient de transmission (g/m$^2$/jour) | Ecart type (g/m$^2$/jour) |
|---|---|---|
| Mowiol 4 88 | 16,00 | 2,00 |
| Mowiol 4 88 $C_{18}$ | 16,43 | 1,51 |
| Mowiol 4 98 | 7,77 | 3,39 |
| Mowiol 4 98 $C_{18}$ | 9,10 | 3,51 |
| Mowiol 28 99 | 4,08 | 2,95 |
| Mowiol 28 99 $C_{18}$ | 4,08 | 1,94 |

**Tableau 10 :** Perméabilité à la vapeur d'eau des cartons couchés avec différents types d'alcool polyvinylique, mesurée avant et après le greffage avec du chlorure d'acide stéarique.

| | Coefficient de transmission (g/m$^2$/jour) | | Ecart type (g/m$^2$/jour) | |
|---|---|---|---|---|
| | Poids de couche (g/m$^2$) | | | |
| Type de couche | 9 | 15 | 9 | 15 |
| Mowiol 4 88 | 43,36 | 6,88 | 3,76 | 2,42 |
| Mowiol 4 88 $C_{18}$ | 43,69 | 6,81 | 4,45 | 1,67 |
| Mowiol 4 98 | 15,67 | 1,29 | 1,00 | 0,70 |
| Mowiol 4 98 $C_{18}$ | 34,28 | 1,96 | 4,69 | 1,43 |
| Mowiol 28 99 | 10,56 | 5,92 | 7,47 | 3,88 |
| Mowiol 28 99 $C_{18}$ | 7,68 | 1,28 | 3,62 | 0,55 |

Des valeurs inférieures à 10 g/m$^2$/jour ont été obtenues pour une couche de 15 g/m$^2$ pour le carton et pour une couche de 9 g/m$^2$ pour le papier. De plus, comme pour la barrière à l'eau, plus le PVA est hydrolysé et de plus haute masse molaire, meilleures sont les propriétés barrières à la vapeur d'eau.

**4.3.2. Perméabilité à la vapeur d'eau mesurée à 38°C et 90% HR**

**Tableau 11 :** Perméabilité à la vapeur d'eau des papiers et cartons couchés avec du Mowiol 28 99, mesurée avant et après le greffage avec du chlorure d'acide stéarique.

| | Papier | | | | Carton | | | |
|---|---|---|---|---|---|---|---|---|
| | NG | | G | | NG | | G | |
| Poids de couche | WVP ($g/m^2$/jour) | Ecart type ($g/m^2$/jour) | WVP ($g/m^2$/jour) | Ecart type ($g/m^2$/jour) | WVP ($g/m^2$/jour) | Ecart type Ecart ($g/m^2$/jour) | WVP ($g/m^2$/jour) | Ecart type ($g/m^2$/jour) |
| 0 | 1139,20 | 108,65 | 1082,72 | 82,95 | 2092,48 | 280,63 | 2113,12 | 150,55 |
| 3 | 1216,13 | 137,34 | 728,08 | 77,04 | 1940,73 | 74,26 | 795,61 | 204,78 |
| 6 | 986,08 | 61,57 | 614,56 | 89,53 | 1947,68 | 87,22 | 568,80 | 9,99 |
| 9 | 890,56 | 59,11 | 467,52 | 130,95 | 1994,56 | 42,47 | 630,72 | 127,03 |
| 15 | - | - | | - | 1826,40 | 66,53 | 307,04 | 45,97 |

*NG = non greffé ; G = greffé

Ni le papier ni le carton couchés avec du PVA ne donnent de barrière à la vapeur d'eau même si le poids de la couche de PVA augmente. Par contre, dès que celle ci est greffée une diminution importante de la perméabilité à la vapeur d'eau peut être observée, comme on peut le constater dans le Tableau 11.

## 44. Perméabilité à l'air - Vase de Mariotte - norme française - NF Q 03-075

Le domaine de perméabilité couvert par la présente norme est: $10^{-2}$ à $10^{2}$ cm3/$m^2$.Pa.s.

Nos résultats, mis à part la perméabilité pour le papier non couché, sont en deçà du domaine couvert par cette norme.

### 4.4.1. Papier

**Tableau 12 :** Perméabilité à l'air du papier en fonction du poids de couche et du type de PVA

| Poids de couche ($g/m^2$) | Mowiol 4 88 | | | | Mowiol 28 99 | | | |
|---|---|---|---|---|---|---|---|---|
| | NG | | G | | NG | | G | |
| | Perméabilité à l'air ($cm^3/m^2Pas$) | Ecart type ($cm^3/m^2Pas$) | Perméabilité à l'air ($cm^3/m^2Pas$) | Ecart type ($cm^3/m^2Pas$) | Perméabilité à l'air ($cm^3/m^2Pas$) | Ecart type ($cm^3/m^2Pas$) | Perméabilité à l'air ($cm^3/m^2Pas$) | Ecart type ($cm^3/m^2Pas$) |
| 0 | 0,174 | 0,0022 | 0,160 | 0,0032 | 0,174 | 0,0022 | 0,160 | 0,0032 |
| 3 | 0,003 | 0,0003 | 0,004 | 0,0011 | 0,002 | 0,0014 | 0,006 | 0,0030 |
| 6 | 0,002 | 0,0002 | 0,002 | 0,0005 | 0,003 | 0,0015 | 0,004 | 0,0003 |
| 9 | 0,002 | 0,0004 | 0,002 | 0,0003 | 0,003 | 0,0012 | 0,004 | 0,0020 |

Conformément à ces résultats, le matériau est très peu perméable à l'air et ceci ne dépend pas du poids de couche, du type de PVA ou de greffage. Cette propriété étant induite par la couche de PVA.

De plus, le greffage n'influence pas la perméabilité à l'air du papier non couché tandis que sur le papier couché, une augmentation de la perméabilité à l'air est observée.

#### 4.4.2. Carton

**Tableau 13 :** Perméabilité à l'air du carton en fonction du poids de couche et du type de PVA

| Poids de couche (g/m²) | Mowiol 4 88 | | | | Mowiol 28 99 | | | |
|---|---|---|---|---|---|---|---|---|
| | NG | | G | | NG | | G | |
| | Perméabilité à l'air ($cm^3/m^2Pas$) | Ecart type ($cm^3/m^2Pas$) | Perméabilité à l'air ($cm^3/m^2Pas$ | Ecart type ($cm^3/m^2Pas$) | Perméabilité à l'air ($cm^3/m^2Pas$ | Ecart type ($cm^3/m^2Pas$) | Perméabilité à l'air ($cm^3/m^2Pas$ | Ecart type ($cm^3/m^2Pas$) |
| 0 | 0,031 | 0,0024 | | | 0,031 | 0,0024 | | |
| 3 | 0,030 | 0,0013 | 0,039 | 0,0007 | 0,024 | 0,0030 | 0,032 | 0,0032 |
| 6 | 0,022 | 0,0023 | 0,037 | 0,0028 | 0,020 | 0,0014 | 0,025 | 0,0012 |
| 9 | 0,015 | 0,0020 | 0,024 | 0,0015 | 0,019 | 0,0007 | 0,026 | 0,0033 |
| 15 | 0,020 | 0,0016 | 0,022 | 0,0013 | 0,020 | 0,0011 | 0,022 | 0,0020 |

Nous pouvons faire les mêmes remarques pour le carton que pour le papier à part le fait que, la perméabilité à l'air du carton vierge est plus faible que celle du papier, dû à sa composition.

Le couchage avec du PVA ne diminue pas beaucoup la perméabilité à l'air même si les poids de couche sont supérieurs, tandis que pour le papier une diminution importante de la perméabilité à l'air a été obtenue même pour des petits poids de couche.

Cette différence est due à l'étalement du PVA sur les deux supports, l'étalement étant meilleur sur le papier qui est plus régulier que le carton. De plus, un simple défaut dans la couche pourrait engendrer une importante perte des propriétés de barrière à l'air.

### 4.5. Résistance aux graisses - Kit Test - Méthode TAPPI - T559 pm-96

L'intensité de la résistance aux graisses augmente avec la valeur donnée par le Kit Test. Une valeur supérieure à 10 est nécessaire pour qu'un matériau soit considéré comme barrière aux graisses.

Les résultats obtenus sont ressemblés dans le tableau ci-dessous.

**Tableau 14 :** Résistance aux graisses des papiers couchés avec de l'alcool polyvinylique, en fonction du poids de couche et du type d'alcool polyvinylique.

| | Kit Test (numéro) | | | |
|---|---|---|---|---|
| | Poids de couche (g/m$^2$) | | | |
| Type de couche | 0 | 3 | 6 | 9 |
| Mowiol 4 88 | 1 | 3 | 8,8 | 12 |
| Mowiol 4 88 $C_{18}$ | 2 | 3 | 6,2 | 9 |
| Mowiol 4 98 | 1 | 5,8 | 2 | 7,6 |
| Mowiol 4 98 $C_{18}$ | 2 | 4,8 | 4,6 | 6,6 |
| Mowiol 28 99 | 1 | 4,4 | 4 | 12 |
| Mowiol 28 99 $C_{18}$ | 2 | 4,8 | 5,6 | 12 |

**Tableau 15 :** Résistance aux graisses des cartons couchés avec de l'alcool polyvinylique, en fonction du poids de couche, du type d'alcool polyvinylique et du greffage.

| | Kit Test (numéro) | | | | |
|---|---|---|---|---|---|
| | Poids de couche (g/m$^2$) | | | | |
| Type de couche | 0 | 3 | 6 | 9 | 15 |
| Mowiol 4 88 | 1 | 1,4 | 3,4 | 11 | 12 |
| Mowiol 4 88 $C_{18}$ | 1 | 1 | 1 | 5 | 12 |
| Mowiol 4 98 | 1 | 1 | 2 | 9,6 | 12 |
| Mowiol 4 98 $C_{18}$ | 1 | 1 | 1,2 | 6 | 12 |
| Mowiol 28 99 | 1 | 2,2 | 7,6 | 11,6 | 12 |
| Mowiol 28 99 $C_{18}$ | 1 | 7,4 | 6,2 | 11,6 | 12 |

La résistance aux graisses ne semble pas augmenter avec le degré d'hydrolyse ni avec le greffage pour les PVA présentant des masses molaires basses mais, par contre, elle augmente clairement avec le poids de couche et avec les valeurs élevées de masse molaire de PVA. Contrairement à ce qui est observé avec les basses masses molaires, le greffage augmente la résistance aux graisses pour les hautes masses molaires.

### 5. Influence de la masse molaire et du degré d'hydrolyse du PVA sur les propriétés barrière des films greffés

Afin de valider l'explication conforme à laquelle les propriétés barrières sont dues à l'élaboration d'un matériau complexe comprenant des macromolécules de PVA séquentiellement dérivées par des acides gras (figure 1), les films d'alcool polyvinylique ont été lavés par trempage dans du chloroforme pendant 24 h pour enlever l'excès du polyvinyle stéarate formé lors de la réaction de greffage.

### 5.1. L'influence du degré d'hydrolyse de l'alcool polyvinylique

Le chloroforme étant un bon solvant pour le polyvinyle stéarate, dissout les macromolécules d'alcool polyvinylique complètement greffées de façon qu'après le lavage ne restent seulement, sur le film, que des molécules de PVA séquentiellement greffées. L'épaisseur de films greffés et dissous a été déterminée par conversion de la quantité dissoute en épaisseur, comme suit:

$$\text{épaisseur} = \frac{m_1 - m_2}{S * d}$$

1)

Ou : $m_1$ = la masse du film avant le lavage (g)
$m_2$ = la masse du film après le lavage (g)
S = la surface du film analysée ($cm^2$)
d = la densité du film ($g/cm^3$)

Les résultats obtenus sont rassemblés dans le tableau Tableau **14**

**Tableau 14.** Epaisseur des films complètement greffés en fonction du type de PVA.

| Type d'alcool polyvinylique | Epaisseur du film greffé (µm) |
|---|---|
| Mowiol 4 88 $C_{18}$ | 9,7 |
| Mowiol 4 98 $C_{18}$ | 1,8 |
| Mowiol 28 99 $C_{18}$ | 1 |

L'épaisseur des films complètement greffés dépend du degré d'hydrolyse. Un taux d'acétate élevé favorise la diffusion de réactif par l'introduction des défauts dans le polymère greffé. On peut conclure que, moins il y aura de défauts dans le film greffé, moindre sera la diffusion de réactif et donc, moindre la quantité de PVA

### 5.2. L'influence de la masse molaire de l'alcool polyvinylique

Les spectres IRTF-ATR, (Figure 2), des films d'alcool polyvinylique greffé avant et après le lavage au chloroforme, montrent l'apparition à 3300-3400 $cm^{-1}$ de la bande d'absorption caractéristique aux groupements hydroxyles. Ceci étant plus évident pour le Mowiol 4 98. En fait, dans le cas du Mowiol 4 88 qui a une masse molaire proche de celle du Mowiol 4 98 l'effet du lavage est moins visible dû à la présence des groupements acétate dans la structure du PVA. Par contre, le Mowiol 28 99 présente moins de groupements hydroxyles même après le lavage, ce qui démontre, par rapport au Mowiol 4 98 qui a un degré d'hydrolyse très proche de lui mais une masse molaire beaucoup plus faible, que le facteur décisif dans les propriétés finales des films greffés, à part le degré d'hydrolyse est la masse molaire. Une masse molaire élevée, associée à un degré d'hydrolyse élevé va procurer un film qui, après le greffage présentera les meilleures propriétés barrière.

## 6. Influence du temps de greffage sur les propriétés barrière des papiers couchés avec du PVA

### 6.1. Absorption l'eau - méthode de $Cobb_{60}$

L'influence du temps de greffage sur la résistance à l'eau du papier couché avec du PVA et greffé avec du C 18 a été analysée à travers le test $Cobb_{60}$.
Les papiers couchés avec 10 $g/m^2$ de l'alcool polyvinylique, Mowiol 4 98 et Mowiol 28 99 ont été conditionnés à 105°C pour 24h et ensuite greffés avec du chlorure d'acide stéarique. Le greffage a eu lieu à la température de 150°C sous une pression de 900 mbar et un balayage d'azote.

**Tableau 17.** Quantité d'eau absorbée (g/m2) en fonction du temps de greffage et du type d'alcool polyvinylique.

| Type d'alcool polyvinylique | Mowiol 4 98 $C_{18}$ | | Mowiol 28 99 $C_{18}$ | |
|---|---|---|---|---|
| Durée du traitement (min) | Cobb ($g/m^2$) | Ecart type ($g/m^2$) | Cobb ($g/m^2$) | Ecart type ($g/m^2$) |
| 0 | 23 | 0,6 | 25 | 2,1 |
| 0,25 | 21 | 1,8 | 18 | 0,9 |
| 0,5 | 14 | 1 | 8 | 2,6 |
| 1 | 11 | 2,1 | 5 | 1,7 |
| 2 | 10 | 2,3 | 1 | 0,7 |
| 5 | 1 | 0,8 | 1 | 0,4 |
| 10 | 3 | 0,5 | 2 | 0,6 |

Après un temps de greffage de 30 secondes on observe une amélioration importante de la résistance à l'eau des papiers enduits avec du PVA.
Le Mowiol 4 98 nécessite un temps plus important que le Mowiol 28 99 pour fournir de bonnes barrières à l'eau, un temps supérieur à 5 minutes étant demandé pour obtenir un indice Cobb inférieur à $10g/m^2$, tandis que un temps de 2 minutes est suffisant pour greffer le Mowiol 28 99 d'une manière convenable.

### 6.2. Angle de contact

L'alcool polyvinylique, selon son type, a été déposé sur Mylar et ensuite greffé avec du chlorure d'acide stéarique, dans les même conditions que les papiers, afin de pouvoir mesurer la propriété de mouillabilité en fonction du temps de greffage.

**Tableau 18.** Angle de contact (°) en fonction du temps de greffage et du type d'alcool polyvinylique.

| Type d'alcool polyvinylique | Mowiol 4 98 $C_{18}$ | | Mowiol 28 99 $C_{18}$ | |
|---|---|---|---|---|
| Durée du traitement de greffage (min) | Angle de contact (°) | Ecart type (°) | Angle de contact (°) | Ecart type (°) |
| 0 | 36 | 2 | 55 | 5 |
| 0,25 | 95 | 2 | 96 | 2 |
| 0,5 | 93 | 3 | 98 | 2 |
| 1 | 105 | 2 | 103 | 1 |
| 2 | 105 | 1 | 105 | 2 |
| 5 | 108 | 2 | 109 | 1 |
| 10 | 103 | 1 | 109 | 1 |

On n'observe pas de différences entre les deux types d'alcool polyvinylique du point de vue de la mouillabilité. Aussi, pour le Mowiol 4 98 ainsi que pour le Mowiol 28 99, un temps de greffage d'une minute est suffisant pour obtenir des angles de contact supérieurs à 100°.

### 7. Propriétés barrière des papiers couchés avec du mélange PVA - amidon

Mélanges d'alcool polyvinylique (Mowiol 28 99) et amidon de mais modifié (C*Film TCF 07311- fourni par Cerestar - groupe Cargill) en différentes proportions (Tableau 19) ont été préparés et utilisés pour coucher les papiers de 40 $g/m^2$.

**Tableau 19.** Mélanges alcool polyvinylique - amidon.

| Echantillon | Quantité Mowiol 28 99 (%) | Quantité amidon C 03711 (%) |
|---|---|---|
| 1 | 100 | - |
| 2 | - | 100 |
| 3 | 25 | 75 |
| 4 | 50 | 50 |

(suite)

| Echantillon | Quantité Mowiol 28 99 (%) | Quantité amidon C 03711 (%) |
|---|---|---|
| 5 | 75 | 25 |

De chaque mélange, 10 g/m$^2$ ont été déposés et après un séchage à 105°C pendant 24 h, les papiers couchés ont été greffés avec du chlorure d'acide stéarique. Les conditions de greffage ont été: 10 minutes à 150°C sous une pression de 900 mbar et balayage d'azote.

**7.1. Barrière à l'eau - méthode de Cobb**

La quantité d'eau absorbée a été déterminée par la méthode de Cobb pour un temps de 30, 60, 300 et 1800 secondes et une surface de 10, 17 cm$^2$. La moyenne de 3 à 5 mesures a été retenue.

a)

| | Cobb$_{30}$ (g/m$^2$) | | Ecart type (g/m$^2$) | |
|---|---|---|---|---|
| Echantillon | NG | G | NG | G |
| 1 | 20 | 0 | 8,9 | 0,1 |
| 2 | 12 | 9 | 2,9 | 1,5 |
| 3 | 22 | 3 | 1,7 | 0,7 |
| 4 | 33 | 3 | 4,0 | 1,8 |
| 5 | 26 | 0 | 4,6 | 0,1 |

b)

| | Cobb$_{60}$ (g/m$^2$) | | | Ecart type (g/m$^2$) | | |
|---|---|---|---|---|---|---|
| Echantillon | NG | G | G - lavé chlorofor me | NG | G | G - lavé chlorofor me |
| 1 | 27 | 0 | 1 | 1,5 | 0,0 | 0,4 |
| 2 | 13 | 8 | 11 | 2,3 | 1,3 | 1,6 |
| 3 | 27 | 5 | 20 | 1,1 | 0,6 | 1,9 |
| 4 | 44 | 4 | 18 | 5,6 | 1,3 | 0,8 |
| 5 | 41 | 2 | 15 | 3,9 | 0,1 | 0,3 |

c)

| | Cobb$_{300}$ (g/m$^2$) | | | Ecart type (g/m$^2$) | | |
|---|---|---|---|---|---|---|
| Echantillon | NG | G | G - lavé chlorofor me | NG | G | G - lavé chlorofor me |
| 1 | 45 | 2 | 4 | 2,8 | 0,1 | 1,1 |
| 2 | 18 | 12 | 11 | 0,2 | 2,5 | 2,1 |
| 3 | 31 | 15 | 24 | 2,2 | 1,1 | 1,6 |
| 4 | 41 | 16 | 28 | 1,9 | 1,3 | 3,7 |
| 5 | 38 | 16 | 23 | 2,5 | 3,1 | 0,8 |

d)

**Tableau 20.** Quantité d'eau absorbée (g/m$^2$) par le papier couché avec différents mélanges alcool polyvinylique - amidon, avant et après le greffage, après des temps de développement de : a). 30 s, b). 60s, c). 300s, d). 1800s.

| échantillon | Cobb$_{1800}$ (g/m$^2$) | | | Ecart type (g/m$^2$) | | |
|---|---|---|---|---|---|---|
| | NG | G | G - lavé chlorofor me | NG | G | G - lavé chlorofor me |
| 1 | 43 | 15 | 9 | 1,3 | 0,8 | 0,6 |
| 2 | 20 | 12 | 15 | 1,4 | 2,9 | 2,6 |
| 3 | 33 | 21 | 28 | 1,9 | 0,8 | 3,8 |
| 4 | 40 | 28 | 36 | 2,9 | 4,7 | 4,1 |
| 5 | 61 | 31 | 29 | 2,8 | 7,1 | 2,2 |

Nous observons que l'ajout de l'amidon dans la sauce de couchage diminue la résistance à l'eau des matériaux. Cette plus faible résistance à l'eau est encore plus nettement mis en évidence par le lavage des papiers enduits avec du chloroforme.
Les papiers enduits avec de l'alcool polyvinylique 2899 pur gardent leurs propriétés hydrophobes même après le lavage. Des valeurs de Cobb inférieures à 10 g/m$^2$ sont obtenues, même après une exposition à l'eau de 30 minutes.
Dans le cas des papiers couchés avec de l'amidon, après leur lavage au chloroforme, l'indice Cobb reste toujours supérieur à 10 g/m$^2$, indépendamment du temps d'exposition au réactif de greffage.

**7.2 Barrière aux graisses - Kit test**

Les propriétés anti-graisses des papiers couchés avec différents mélanges alcool polyvinylique-amidon, avant et après le greffage avec du chlorure d'acide stéarique, ont été mesurées avec le Kit Test (Tableau 21).

**Tableau 21.** Résistance aux graisses des papiers couchés avec différents mélanges amidon - alcool polyvinylique, avant et après le greffage, avec du chlorure d'acide stéarique.

| Echantillon | Kit Test (numéro) | | |
|---|---|---|---|
| | NG | G | G - lavé chloroforme |
| 1 | >12 | >12 | >12 |
| 2 | 3 | 6 | 3 |
| 3 | 5 | 9 | 6 |
| 4 | >12 | >12 | 10 |
| 5 | >12 | >12 | >12 |

L'alcool polyvinylique, enduit sur le papier, lui confère de bonnes barrières aux graisses, tandis que la couche d'amidon n'est pas du tout barrière. Un ajout de 25% d'alcool polyvinylique dans la sauce d'amidon, n'améliore pas la barrière, une quantité plus importante, de 50%, étant requise pour commencer à créer une barrière aux graisses.
Le greffage des papiers enduits avec du PVA ne diminue pas la résistance aux graisses des ceux-ci. Les papiers couchés, avec de l'amidon ou du mélange d'alcool polyvinylique/ amidon, pour des quantités d'alcool polyvinylique inférieures à 50%, ne présentent pas de barrières aux graisses après le greffage. Donc, pour créer une barrière aux graisses efficace, il faut que la quantité d'alcool polyvinylique dans le mélange soit supérieure à 50%. Le même raisonnement pourrait être fait quand les papiers enduits et greffés sont lavés au chloroforme.

**7.3 Perméabilité à la vapeur d'eau (23°C et 50% HR)**

**Tableau 22.** Perméabilité à la vapeur d'eau du papier couché avec du PVA, non greffé ou greffé avec du C 18.

| Echantillon | Coefficient de transmission (g/m$^2$/jour) | | Ecart type (g/m$^2$/jour) | |
|---|---|---|---|---|
| | NG | G | NG | G |
| 1 | 3,53 | 3,53 | 2,97 | 3,37 |
| 2 | 256,76 | 260,57 | 11,81 | 19,93 |

(suite)

| | Coefficient de transmission (g/m²/jour) | | Ecart type (g/m²/jour) | |
|---|---|---|---|---|
| Echantillon | NG | G | NG | G |
| 3 | 98,28 | 62,81 | 5,80 | 1,80 |
| 4 | 20,33 | 21,74 | 5,68 | 5,85 |
| 5 | 10,29 | 7,66 | 5,87 | 2,40 |

Le film d'amidon n'est pas barrière à la vapeur d'eau ni avant ni après le greffage.
La barrière à la vapeur d'eau des papiers couchés avec de l'alcool polyvinylique est crée par l'alcool polyvinylique lui-même et non par le greffage de celui-ci. En effet, il n'y a pas de différences entre la couche d'alcool polyvinylique greffée et celle non greffée (un coefficient de transmission de 3,53 g/m$^2$/jour étant obtenu dans les deux cas).
On remarque une diminution d'un facteur 100 du coefficient de transmission des papiers enduits avec de l'amidon par rapport aux papiers enduits avec de l'alcool polyvinylique. Une augmentation de la quantité d'alcool polyvinylique dans la sauce de couchage engendrant une diminution du coefficient de transmission de la vapeur d'eau.

**8. Dosage par pyrolyse d'acide gras greffé sur les films d'alcool polyvinylique**

La densité de greffage a été déterminée par pyrolyse des échantillons lavés au chloroforme et par analyse par chromatographie en phase gazeuse couplée à un spectromètre de masse.

***Conditions de pyrolyse :***

- Température de la cellule de pyrolyse : 175°C
- Temps de montée en température : 8 ms
- Température de pyrolyse : 650°C
- Temps de pyrolyse : 2 s
- Masse pyrolysée : environ 0.2 a 0.5 mg

On récupère des aires des pics qu'ensuite on les transforme en quantité greffée à l'aide de la courbe étalon.
La courbe étalon est obtenue en analysant en pyrolyse des quantités connues d'acide stéarique. Les étalons suivent le même protocole de pyrolyse.
La courbe étalon obtenue est linéaire.
La densité de greffage d'acide gras est exprimée en ng/mg. Cette quantité peut être calculée par la formule suivante :

$$Q = m / M \quad (2)$$

Avec

Q, la quantité de réactif en ng par mg d'alcool polyvinylique (ng/mg),
m, la quantité de réactif calculée à l'aide de la courbe étalon (ng),
M, le poids d'alcool polyvinylique analysé (mg),

Les résultats obtenus sont présentés dans le Tableau 23. Ils indiquent que, paradoxalement, les PVA greffés les moins performants au niveau des barrières sont aussi ceux qui pondéralement comprennent le plus d'acides gras.

**Tableau 23.** Quantité d'acide stéarique greffée sur le PVA (mg/g).

| Type d'alcool polyvinylique | Densité de greffage (ng/mg) |
|---|---|
| Mowiol 4 88 $C_{18}$ | 975 |
| Mowiol 4 98 $C_{18}$ | 433 |
| Mowiol 28 99 $C_{18}$ | 177 |

Le Mowiol 28 99, par rapport aux autres deux types d'alcools polyvinyliques, induit aux papiers de bonnes barrières après le greffage, en demandant, pour ceci, de faibles quantités de réactif.

**9. Influence de la nature de l'acide gras**

Les chlorures d'acide palmitique (C12) et béhénique (C22) (Aldric chemical company) ont été utilisés dans les mêmes conditions que le chlorure d'acide stéarique. Seule la température de développement de la réaction a été modifiée. Une température de 130 °C a été utilisée pour l'acide palmitique, une température de 150°c pour l'acide stéarique et une température de 180°C pour l'acide béhénique
Nous avons procédé au greffage avec les trois chlorures d'acide de papiers enduits avec 10g/m2 de PVA Mowiol 2899. Sachant que les propriétés barrières aux graisses et aux gaz sont en réalité apportées par la couche de PVA elle-même, nous nous sommes contentés de vérifier la barrière à l'eau qui est apportée par le greffage après lavage du chloroforme en mesurant le Cobb 60. Le lavage au chloroforme est important pour éliminer la contribution du compartiment I qui aurait pu éventuellement se former. Les résultats sont présentés dans le tableau suivant.

| | Nature de l'acide gras | C16 | | C18 | | C22 | | |
|---|---|---|---|---|---|---|---|---|
| | Temps de réaction (min) | Cobb 60 (g/m2) | Ecart type (g/m2) | Cobb 60 (g/m2) | Ecart type (g/m2) | Cobb 60 (g/m2) | Ecart type (g/m2) | |
| | 2 | 2 | 0,8 | 1 | 0,7 | 1 | 0,6 | |
| | 5 | 1 | 0,6 | 1 | 0,4 | 0 | 0,4 | |

Les résultats indiquent que de meilleures propriétés barrières semblent être obtenues avec l'utilisation de chaînes grasses plus longues mais cette influence est faible.
De la même manière, nous avons greffé des films de PVA Mowiol 2899 par les trois chlorures d'acide et nous avons procédé à leur analyse par Spectrométrie Infra rouge ATR toujours après lavage au chloroforme. Les spectres obtenus indiquent tous la disparition totale de la bande OH à 3400 cm-1. Le PVA est donc, dans les trois cas, totalement greffé sur l'épaisseur d'analyse de l'ATR, c'est-à-dire environ un micron.
L'ensemble des résultats obtenus démontre que la structure que nous avons décrit sur la figure 1 est valide quelque soit la nature des acides gras que nous avons utilisés.

<u>Références bibliographiques</u>

- Biver et al., Macromolecules, vol. 35, pages 2552-2559, 2002
- Jayaraman K., Shaw Ling Hsu and McCarthy T. J., 2007, "Versatile multilayer thin film preparation using hydrophobic interactions, crystallization and chemical modification of poly(vinyl alcohol)", Langmuir, 23, 3260-3264
- Kozlov M. Quarmyne M., C hen W. and McCrthy T. J., 2003 "Adsorption and chemistry of ultra-thin films of polyvinyl alcohol for sensor development", Polymer Science and Engineering, 44(2),283-284
- Freire C.S.R, Silvestre A.J.D., Neto C.P., Belgacem N., Gandini A., 2006, Controlled heterogeneous modification of Cellulose fibers with fatty acids: Effect of reaction conditions on the extent of esterification and fiber properties, J Appl Polym Sci, 100, 1093-1102.
- Kwatra H. S., Caruthers J. M., 1992, Synthesis of long chain fatty acids esterified onto cellulose via the vacuum-acid chloride process, Ind. Eng. Chem. Res. 31: 2647-2651.
- Mallory W., 1996, Heat sealable multilayer film containing polyvinyl alcohol layer, Patent PCT WO96/16799.
- Nathansohn A., 1930, Procédé de fabrication de textiles hydrofuges, Patent 693803.
- Vaca Garcia C., Girardeau S., Deschamps G., Nicolas D., Caruel H., Borredon M.E., Gaset A., 2000, Patent PCT WO00/50492.
- Vallette P. and Gervason G., 1976, "Amélioration de certaines caractéristiques des complexes par dépôt en surface de produits chimiques", XVIe Conférence - Matériaux composites à base de papier et carton pour l'emballage.

## Revendications

1. Film ayant des propriétés barrière à l'eau, aux graisses, aux gaz et à la vapeur d'eau **caractérisé en ce qu'**il comprend :

   - un film de PVA, le PVA ayant une masse molaire supérieure à 13 000 g/mol et un degré d'hydrolyse supérieur à 81 %,
   - séquentiellement greffé en surface avec un acide gras ayant une chaine aliphatique comprenant au moins 12 atomes de carbone.

2. Film ayant des propriétés barrière à l'eau, aux graisses, aux gaz et à la vapeur d'eau selon la revendication 1 **caractérisé en ce qu'**il comprend :

   - un film de PVA, le PVA ayant une masse molaire supérieure à 13 000 g/mol et un degré d'hydrolyse supérieur à 81%,
   - une couche non extractible avec du chloroforme, comprenant des molécules de PVA, ayant une masse molaire supérieure à 13 000 g/mol et un degré d'hydrolyse supérieur à 81 %, séquentiellement greffées avec un acide gras ayant une chaine aliphatique comprenant au moins 12 atomes de carbone.

3. Film ayant des propriétés barrière à l'eau, aux graisses, aux gaz et à la vapeur d'eau selon l'une des revendications 1-2 **caractérisé en ce qu'**il comprend :

   - un film de PVA, le PVA ayant une masse molaire supérieure à 13 000 g/mol et un degré d'hydrolyse supérieur à 81 %,
   - une couche non extractible avec du chloroforme, comprenant des molécules de PVA, ayant une masse molaire supérieure à 13 000 g/mol et un degré d'hydrolyse supérieur à 81 %, séquentiellement greffées avec un acide gras ayant une chaine aliphatique comprenant au moins 12 atomes de carbone,
   - une couche extractible avec du chloroforme, comprenant des molécules de PVA, ayant une masse molaire supérieure à 13 000 g/mol et un degré d'hydrolyse supérieur à 81 %, entièrement greffées avec un acide gras ayant une chaine aliphatique comprenant au moins 12 atomes de carbone.

4. Film aux propriétés barrière selon l'une des revendications 1-3 **caractérisé en ce que** le PVA a une masse molaire de 145 000 g/mol.

5. Film aux propriétés barrière selon l'une des revendications 1-4 **caractérisée en ce que** le PVA a un degré d'hydrolyse d'au moins 87%.

6. Film aux propriétés barrière selon l'une des revendications 1-5 **caractérisé en ce que** l'acide gras est un acide gras ayant une chaine aliphatique comprenant 16 à 22 atomes de carbone.

7. Film aux propriétés barrière selon l'une des revendications 1-6 **caractérisé en ce que** l'acide gras est choisi dans le groupe comprenant l'acide stéarique, l'acide palmitique et l'acide béhénique.

8. Support **caractérisé en ce qu'**il porte un film aux propriétés barrière selon l'une des revendications précédentes.

9. Support selon la revendication 8 **caractérisé en ce qu'**il est constitué d'un matériau cellulosique.

10. Procédé de formation d'un film, ayant des propriétés barrière à l'eau, aux graisses, aux gaz et à la vapeur d'eau, à la surface d'un support **caractérisé en ce qu'**il comprend les étapes suivantes :

    - enduction du support avec du PVA pour former un film de PVA à la surface du support, le PVA ayant une masse molaire supérieure à 13 000 g/mol et un degré d'hydrolyse supérieur à 81 %;
    - séchage du film de PVA ;
    - greffage par estérification en phase hétérogène d'au moins un acide gras ayant une chaine aliphatique comprenant au moins 12 atomes de carbone en surface du film de PVA.

11. Procédé selon la revendication 10 **caractérisé en ce que** le greffage de l'acide gras est effectué par estérification en phase hétérogène avec un chlorure d'acide gras ayant une chaine aliphatique comprenant au moins 12 atomes

de carbone.

12. Procédé selon l'une des revendications 10-11 **caractérisé en ce que** l'acide gras est un acide gras en ayant une chaine aliphatique comprenant 16 à 22 atomes de carbone.

13. Procédé selon l'une des revendications 10-12 **caractérisé en ce que** l'acide gras est choisi dans le groupe comprenant l'acide stéarique, l'acide palmitique et l'acide béhénique.

## Patentansprüche

1. Dünne Folie, welche Barriereeigenschaften gegenüber Wasser, Fetten, Gasen und Wasserdampf aufweist, **dadurch gekennzeichnet, dass** sie umfasst:

   - eine dünne PVA-Folie, wobei das PVA eine Molmasse über 13000 g/mol und einen Hydrolysegrad über 81% aufweist,
   - die sequentiell an der Oberfläche mit einer Fettsäure mit einer aliphatischen Kette, die mindestens 12 Kohlenstoffatome umfasst, gepfropft ist.

2. Dünne Folie, welche Barriereeigenschaften gegenüber Wasser, Fetten, Gasen und Wasserdampf aufweist, nach Anspruch 1, **dadurch gekennzeichnet, dass** sie umfasst:

   - eine dünne PVA-Folie, wobei das PVA eine Molmasse über 13000 g/mol und einen Hydrolysegrad über 81% aufweist,
   - eine mit Chloroform nicht extrahierbare Schicht, umfassend PVA-Moleküle mit einer Molmasse über 13000 g/mol und einem Hydrolysegrad über 81%, welche sequentiell mit einer Fettsäure mit einer aliphatischen Kette, die mindestens 12 Kohlenstoffatome umfasst, gepfropft sind.

3. Dünne Folie, welche Barriereeigenschaften gegenüber Wasser, Fetten, Gasen und Wasserdampf aufweist, nach einem der Ansprüche 1-2, **dadurch gekennzeichnet, dass** sie umfasst:

   - eine dünne PVA-Folie, wobei das PVA eine Molmasse über 13000 g/mol und einen Hydrolysegrad über 81% aufweist,
   - eine mit Chloroform nicht extrahierbare Schicht, umfassend PVA-Moleküle mit einer Molmasse über 13000 g/mol und einem Hydrolysegrad über 81%, welche sequentiell mit einer Fettsäure mit einer aliphatischen Kette, die mindestens 12 Kohlenstoffatome umfasst, gepfropft sind,
   - eine mit Chloroform extrahierbare Schicht, umfassend PVA-Moleküle mit einer Molmasse über 13000 g/mol und einem Hydrolysegrad über 81%, welche vollständig mit einer Fettsäure mit einer aliphatischen Kette, die mindestens 12 Kohlenstoffatome umfasst, gepfropft sind.

4. Dünne Folie mit Barriereeigenschaften nach einem der Ansprüche 1-3, **dadurch gekennzeichnet, dass** das PVA eine Molmasse von 145000 g/mol aufweist.

5. Dünne Folie mit Barriereeigenschaften nach einem der Ansprüche 1-4, **dadurch gekennzeichnet, dass** das PVA einen Hydrolysegrad von mindestens 87% aufweist.

6. Dünne Folie mit Barriereeigenschaften nach einem der Ansprüche 1-5, **dadurch gekennzeichnet, dass** die Fettsäure eine Fettsäure mit einer aliphatischen Kette, die 16 bis 22 Kohlenstoffatome aufweist, ist.

7. Dünne Folie mit Barriereeigenschaften nach einem der Ansprüche 1-6, **dadurch gekennzeichnet, dass** die Fettsäure in der Gruppe, umfassend Stearinsäure, Palmitinsäure und Behensäure, ausgewählt ist.

8. Träger, **dadurch gekennzeichnet, dass** er eine dünne Folie mit Barriereeigenschaften nach einem der vorangegangenen Ansprüche trägt.

9. Träger nach Anspruch 8, **dadurch gekennzeichnet, dass** er aus einem Cellulosematerial gebildet ist.

10. Verfahren zur Bildung einer dünnen Folie, welche Barriereeigenschaften gegenüber Wasser, Fetten, Gasen und

Wasserdampf aufweist, auf der Oberfläche eines Trägers, **dadurch gekennzeichnet, dass** es die folgenden Schritte umfasst:

- Aufbringen einer Schicht von PVA auf dem Träger, um eine dünne PVA-Folie auf der Oberfläche des Trägers zu bilden, wobei das PVA eine Molmasse über 13000 g/mol und einen Hydrolysegrad über 81% aufweist,
- Trocknung der PVA-Folie;
- durch Veresterung in heterogener Phase erfolgendes Pfropfen von mindestens einer Fettsäure mit einer aliphatischen Kette, welche mindestens 12 Kohlenstoffatome umfasst, auf die Oberfläche der dünnen PVA-Folie.

**11.** Verfahren nach Anspruch 10, **dadurch gekennzeichnet, dass** das Pfropfen der Fettsäure durch Veresterung in heterogener Phase mit einem Fettsäurechlorid mit einer aliphatischen Kette, welche mindestens 12 Kohlenstoffatome umfasst, erfolgt.

**12.** Verfahren nach einem der Ansprüche 10-11, **dadurch gekennzeichnet, dass** die Fettsäure eine Fettsäure mit einer aliphatischen Kette, die 16 bis 22 Kohlenstoffatome umfasst, ist.

**13.** Verfahren nach einem der Ansprüche 10-12, **dadurch gekennzeichnet, dass** die Fettsäure in der Gruppe, umfassend Stearinsäure, Palmitinsäure und Behensäure, ausgewählt ist.

**Claims**

**1.** Film having water, grease, gas and water vapor barrier properties, **characterized in that** it includes:

- a PVA film, in which the PVA has a molecular weight greater than 13,000 g/mol and a degree of hydrolysis greater than 81%,
- sequentially surface-grafted with a fatty acid having an aliphatic chain including at least 12 carbon atoms.

**2.** Film having water, grease, gas and water vapor barrier properties according to the claim 1, **characterized in that** it includes:

- a PVA film, in which the PVA has a molecular weight greater than 13,000 g/mol and a degree of hydrolysis greater than 81%,
- a layer that is non-extractible with chloroform, including PVA molecules, having a molecular weight greater than 13,000 and a degree of hydrolysis greater than 81%, sequentially grafted with a fatty acid having an aliphatic chain including at least 12 carbon atoms.

**3.** Film having water, grease, gas and water vapor barrier properties according to one of claims 1-2, **characterized in that** it includes:

- a PVA film, in which the PVA has a molecular weight greater than 13,000 and a degree of hydrolysis greater than 81%,
- a layer that is non-extractible with chloroform, including PVA molecules, having a molecular weight greater than 13,000 g/mol and a degree of hydrolysis greater than 81%, sequentially grafted with a fatty acid having an aliphatic chain including at least 12 carbon atoms,
- a layer that is extractible with chloroform, including PVA molecules, having a molecular weight greater than 13,000 g/mol and a degree of hydrolysis greater than 81%, entirely grafted with a fatty acid having an aliphatic chain including at least 12 carbon atoms.

**4.** Film with barrier properties according to one of claims 1-3, **characterized in that** the PVA has a molecular weight of 145,000.

**5.** Film with barrier properties according to one of claims 1-4, **characterized in that** the PVA has a degree of hydrolysis of at least 87%.

**6.** Film with barrier properties according to one of claims 1-5, **characterized in that** the fatty acid is a fatty acid having an aliphatic chain including 16 to 22 carbon atoms.

**7.** Film with barrier properties according to one of claims 1-6, **characterized in that** the fatty acid is chosen from the group including stearic acid, palmitic acid and behenic acid.

**8.** Substrate **characterized in that** it has a film with barrier properties according to one of the previous claims.

**9.** Substrate according to claim 8, **characterized in that** it consists of a cellulosic material.

**10.** Process for forming a film, having water, grease, gas and water vapor barrier properties, at the surface of a substrate, **characterized in that** it includes the following steps:

- coating of the substrate with PVA to form a PVA film at the surface of the substrate, in which the PVA has a molecular weight greater than 13,000 g/mol and a degree of hydrolysis greater than 81%;
- drying of the PVA film;
- grafting by esterification in the heterogeneous phase of at least one fatty acid having an aliphatic chain including at least 12 carbon atoms at the surface of the PVA film.

**11.** Process according to claim 10, **characterized in that** the grafting of the fatty acid is performed by esterification in the heterogeneous phase with a fatty acid chloride having an aliphatic chain including at least 12 carbon atoms.

**12.** Process according to one of claims 10-11, **characterized in that** the fatty acid is a fatty acid having an aliphatic chain including 16 to 22 carbon atoms.

**13.** Process according to one of claims 10-12 **characterized in that** the fatty acid is chosen from the group including stearic acid, palmitic acid and behenic acid.

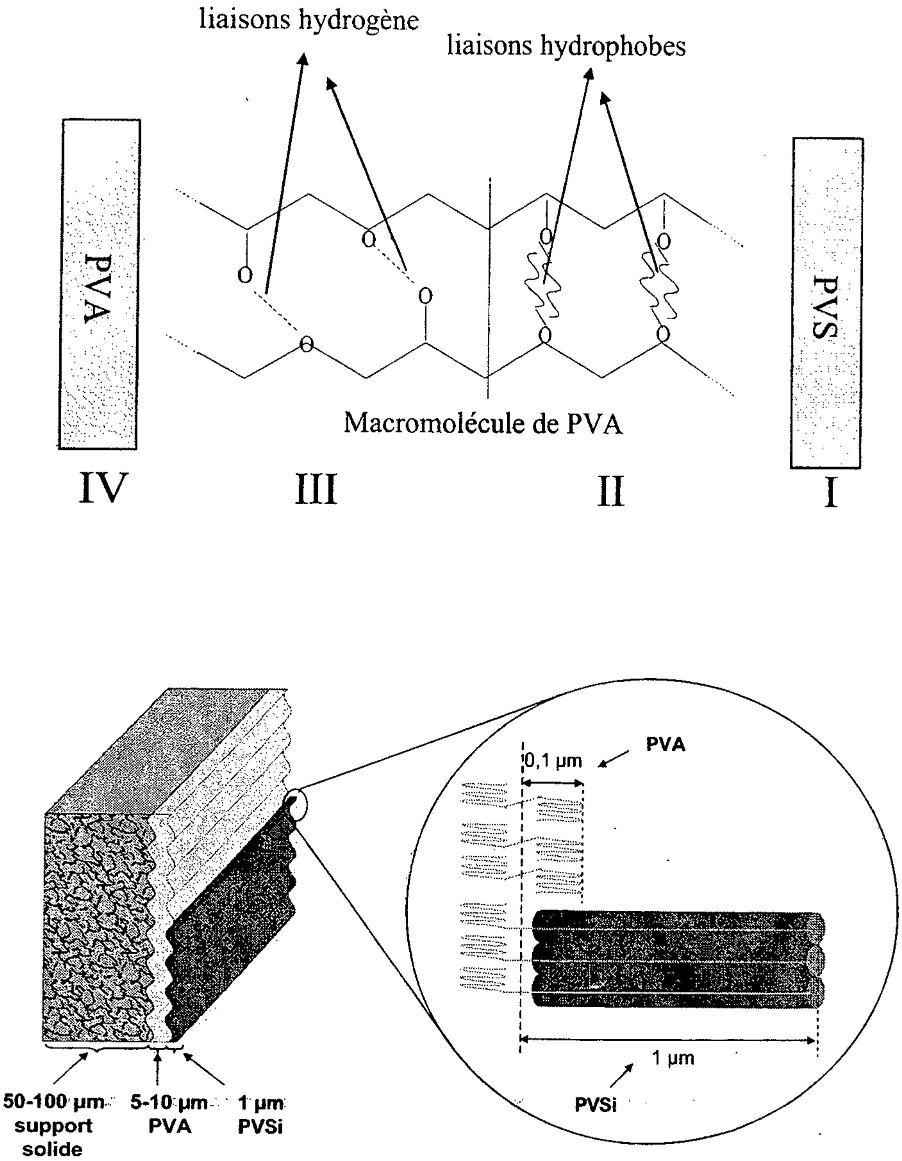
liaisons hydrogène
liaisons hydrophobes
PVA
PVS
Macromolécule de PVA
IV
III
II
I
PVA
0,1 µm
1 µm
PVSi
50-100 µm support solide
5-10 µm PVA
1 µm PVSi

**FIG. 1**

**a)**

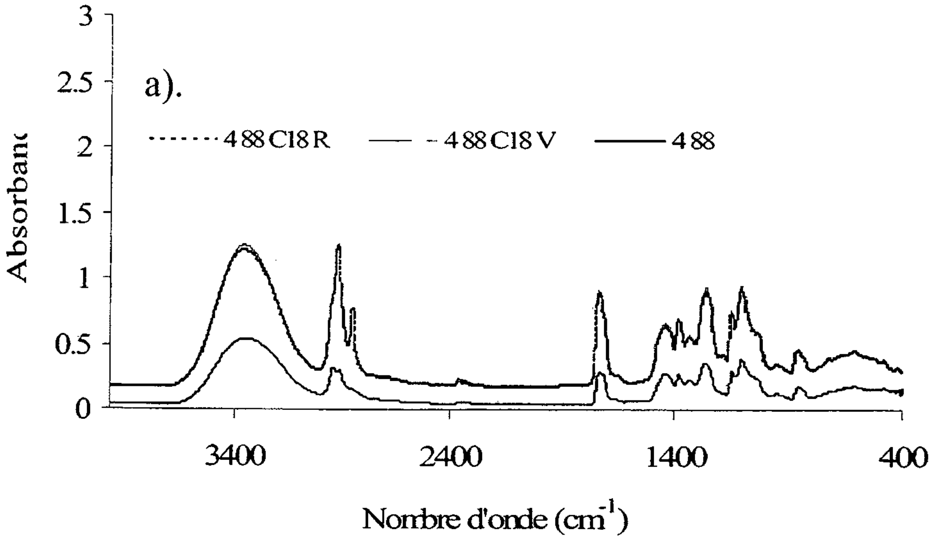
3
2.5
2
1.5
1
0.5
0
a).
4 88 C18 R
4 88 C18 V
4 88
Absorbanc
3400
2400
1400
400
Nombre d'onde (cm-1)

**b)**

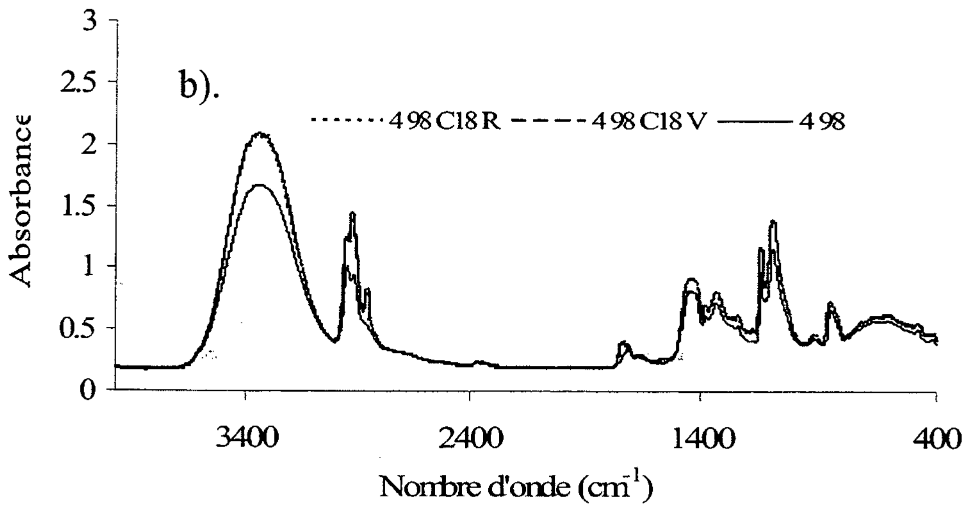
3
2.5
2
1.5
1
0.5
0
b).
4 98 C18 R
4 98 C18 V
4 98
Absorbance
3400
2400
1400
400
Nombre d'onde (cm-1)

**FIG. 2**

c)

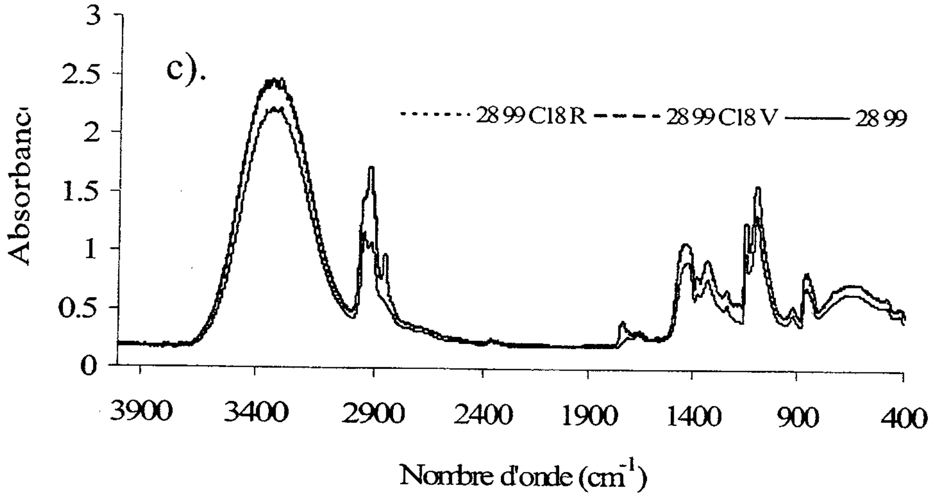
c).
Absorbanc
28 99 C18 R
28 99 C18 V
28 99
Nombre d'onde (cm-1)
3
2.5
2
1.5
1
0.5
0
3900
3400
2900
2400
1900
1400
900
400

FIG. 2

a)

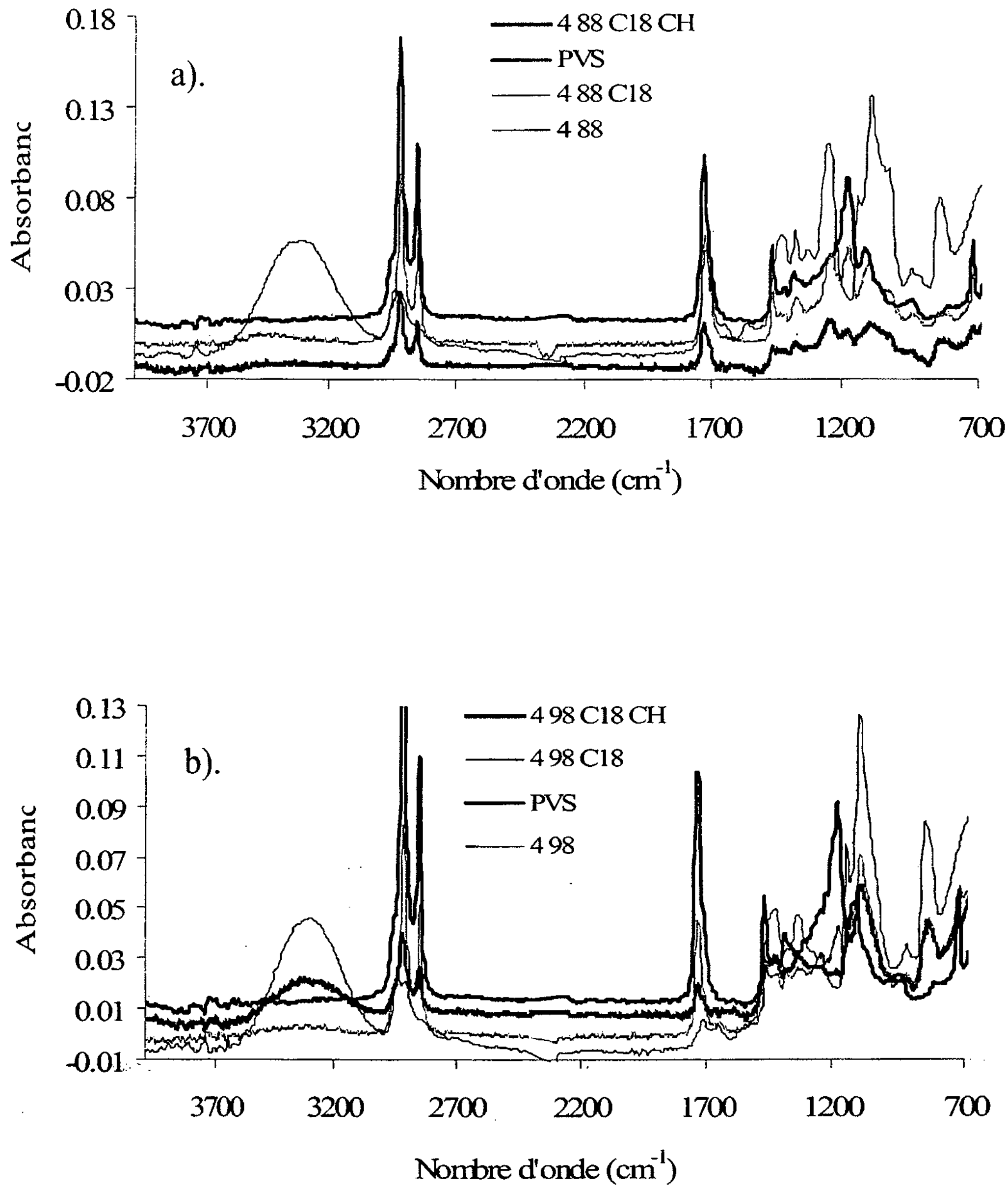
a).
4 88 C18 CH
PVS
4 88 C18
4 88
Absorbanc
Nombre d'onde (cm-1)
b).
4 98 C18 CH
4 98 C18
PVS
4 98
Absorbanc
Nombre d'onde (cm-1)

b)

**FIG. 3**

c)

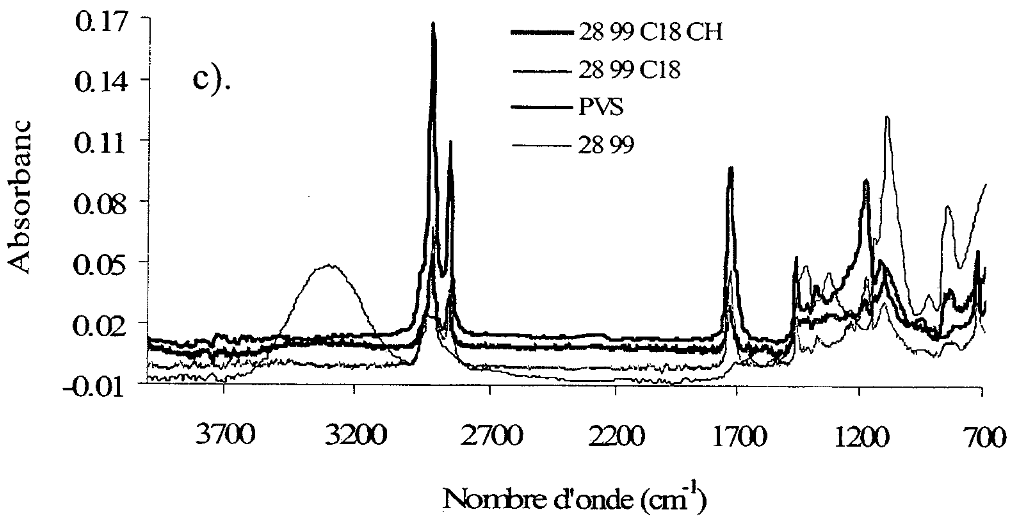
0.17
0.14
0.11
0.08
0.05
0.02
-0.01
Absorbanc
c).
28 99 C18 CH
28 99 C18
PVS
28 99
3700
3200
2700
2200
1700
1200
700
Nombre d'onde (cm-1)

**FIG. 3**

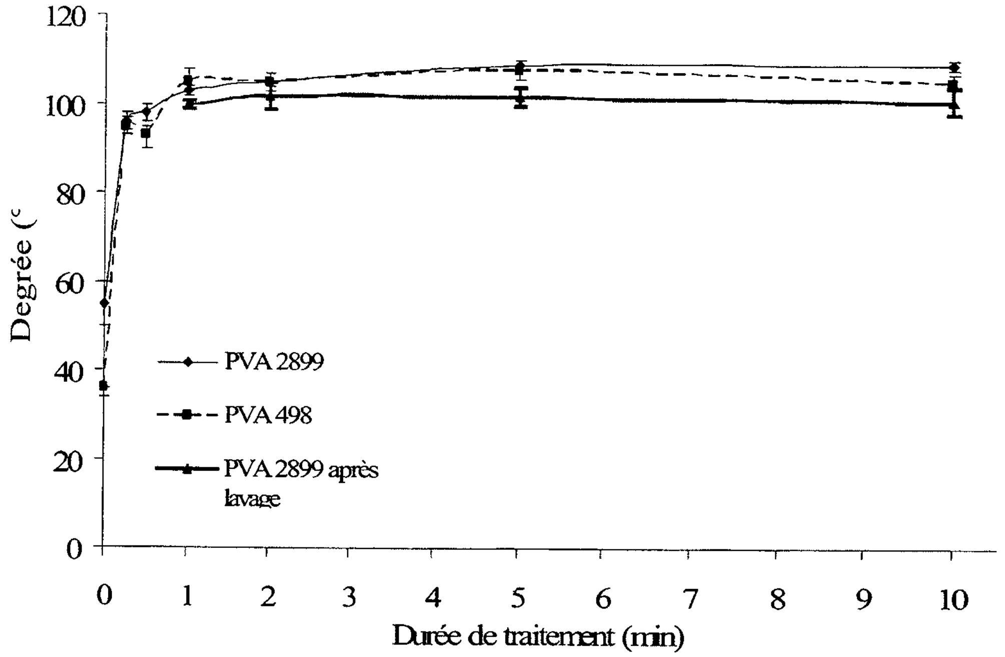
120
100
80
60
40
20
0
Degrée (°
PVA 2899
PVA 498
PVA 2899 après lavage
0
1
2
3
4
5
6
7
8
9
10
Durée de traitement (min)

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1007202 A
- WO 9616799 A
- WO 693803 A
- WO 0050492 A, Vaca Garcia C., Girardeau S., Deschamps G., Nicolas D., Caruel H., Borredon M.E., Gaset A.


### Littérature non-brevet citée dans la description


- **JAYARAMAN K. ; SHAW LING HSU ; MCCARTHY T. J.** Versatile multilayer thin film preparation using hydrophobic interactions, crystallization and chemical modification of poly(vinyl alcohol. *Langmuir,* 2007, vol. 23, 3260-3264
- **KOZLOV M. QUARMYNE M. ; C HEN W. ; MCCRTHY T. J.** Adsorption and chemistry of ultra-thin films of polyvinyl alcohol for sensor development. *Polymer Science and Engineering,* 2003, vol. 44 (2), 283-284
- **BIVER et al.** *Macromolecules,* 2002, vol. 35, 2552-2559
- **KOZLOV M. ; QUARMYNE M. ; C HEN W. ; MCCRTHY T. J.** Adsorption and chemistry of ultra-thin films of polyvinyl alcohol for sensor development. *Polymer Science and Engineering,* 2003, vol. 44 (2), 283-284
- **FREIRE C.S.R ; SILVESTRE A.J.D. ; NETO C.P. ; BELGACEM N. ; GANDINI A.** Controlled heterogeneous modification of Cellulose fibers with fatty acids: Effect of reaction conditions on the extent of esterification and fiber properties. *J Appl Polym Sci,* 2006, vol. 100, 1093-1102
- **KWATRA H. S. ; CARUTHERS J. M.** Synthesis of long chain fatty acids esterified onto cellulose via the vacuum-acid chloride process. *Ind. Eng. Chem. Res.,* 1992, vol. 31, 2647-2651
- **VALLETTE P. ; GERVASON G.** Amélioration de certaines caractéristiques des complexes par dépôt en surface de produits chimiques. *XVIe Conférence - Matériaux composites à base de papier et carton pour l'emballage,* 1976